(19) **Europäisches Patentamt**
**European Patent Office**
**Office européen des brevets**

(11) **EP 3 493 498 B1**

(12) **EUROPEAN PATENT SPECIFICATION**

(45) Date of publication and mention
of the grant of the patent:
**25.08.2021 Bulletin 2021/34**

(51) Int Cl.:
*H04L 27/22* (2006.01)        *H04B 1/16* (2006.01)
*H04B 1/10* (2006.01)

(21) Application number: **17834045.1**

(86) International application number:
**PCT/JP2017/025464**

(22) Date of filing: **12.07.2017**

(87) International publication number:
**WO 2018/021037 (01.02.2018 Gazette 2018/05)**

(54) **RECEIVING DEVICE AND METHOD, AND DEMODULATION DEVICE**

EMPFANGSVORRICHTUNG UND -VERFAHREN UND DEMODULATIONSVORRICHTUNG

DISPOSITIF ET PROCÉDÉ DE RÉCEPTION, ET DISPOSITIF DE DÉMODULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2016 JP 2016146793**

(43) Date of publication of application:
**05.06.2019 Bulletin 2019/23**

(73) Proprietor: **Sony Semiconductor Solutions
Corporation
Atsugi-shi, Kanagawa 243-0014 (JP)**

(72) Inventors:
• **KAMATA Hiroyuki**
**Atsugi-shi**
**Kanagawa 243-0014 (JP)**
• **HIRAYAMA Yuichi**
**Atsugi-shi**
**Kanagawa 243-0014 (JP)**

• **MATSUMOTO Hideyuki**
**Atsugi-shi**
**Kanagawa 243-0014 (JP)**
• **FUTAMI Tetsuhiro**
**Atsugi-shi**
**Kanagawa 243-0014 (JP)**
• **HORIGUTI Takashi**
**Atsugi-shi**
**Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(56) References cited:
JP-A- H09 247 226      JP-A- 2002 077 281
JP-A- 2008 104 015      JP-A- 2008 271 182
JP-A- 2009 100 357      JP-A- 2012 075 028
JP-A- 2016 059 027      US-A1- 2007 183 518
US-A1- 2009 141 836

**Description**

TECHNICAL FIELD

The present technology relates to a receiving apparatus and method, and a demodulating apparatus, and more particularly, to a receiving apparatus and method and a demodulating apparatus that suppresses influence exerted by intersymbol interference on a frequency error of a synchronization signal.

BACKGROUND ART

Satellite broadcasting has been widespread, and many contents are being broadcast. Along with this, it is desired to broadcast higher definition images in recent years. In order to broadcast high-definition images, it is necessary to synchronize signals at high speed, and various proposals have been made (e.g., Patent Document 1).

Furthermore, since a data amount becomes large to broadcast high-definition image signals, it is necessary to perform transmission efficiently. Accordingly, it is necessary to transmit signals through a band limiting filter having a small roll-off rate on the transmitting side.

From patent application JP2008104015 (A), an automatic frequency control apparatus which compensates the frequency error of a low carrier to noise ratio receiving signal is known.

CITATION LIST

PATENT DOCUMENT

Patent Document 1: Japanese Patent Application Laid-Open No. 2008-278188

SUMMARY OF THE INVENTION

PROBLEMS TO BE SOLVED BY THE INVENTION

Basically, a configuration of a receiving apparatus that receives a signal transmitted from the transmitting side needs to correspond to the transmitting side. Therefore, in a case where a filter with a low roll-off rate is used on the transmitting side, it is necessary to use the filter with the same low roll-off rate on the receiving side as well. Specifically, use of a filter with a roll-off rate of 0.03 is expected.

Meanwhile, in a case where the filter with a low roll-off rate is used, the number of taps of the filter increases, and a circuit scale increases. As a result, a cost increases. Furthermore, a loop delay of a synchronous loop becomes long, and synchronization performance deteriorates. In view of the above, with respect to the receiving apparatus, it is desirable that the number of taps of the filter does not become so large.

However, if the number of taps of the filter in the receiving apparatus is not sufficient, a component based on intersymbol interference (ISI) with respect to a reception signal cannot be removed. As a result, in a case where a frequency error is detected using a synchronization signal included in a reception signal in the receiving apparatus and a frequency is to be synchronized, deviation (error) based on the intersymbol interference is generated in the detected frequency error, whereby it becomes difficult to accurately synchronize the frequency.

The present technology has been conceived in view of such a situation, and it is intended to suppress influence exerted by the intersymbol interference on the frequency error of the synchronization signal.

2009/141836 relates to a reception device according to the prior art in which effects of inter symbol interference on a frequency error in a synchronization nal is minimized by first detecting a frequency error from a phase difference then a residual frequency error from an inter symbol interference.

SOLUTIONS TO PROBLEMS

According to a first aspect, the invention provides a receiving apparatus in accordance with claim 1. According to a second aspect, the invention provides a method of reception in accordance with claim 10. According to a third aspect, the invention provides a demodulating apparatus in accordance with claim 11. Further aspects are set forth in the dependent claims.

An aspect of the present technology is a receiving apparatus including an estimation unit that estimates an estimation value of a frequency error of a symbol included in a synchronization signal of a reception signal and a control unit that controls a component based on intersymbol interference of the estimation value.

The estimation value mentioned above can be estimated from a phase difference between the two symbols.

A distance between the two symbols may be two or more.

A detection unit that detects an inversion state of an I signal and a Q signal to be received may be further provided.

The distance between the two symbols for estimating the estimation value may be an odd number of three or more.

The estimation value is estimated from the two symbols in which the distance between the symbols is an even number, and the inversion state of the I signal and the Q signal can be detected from the two symbols in which the distance between the symbols is an odd number.

In a case where the inversion of the I signal and the Q signal to be received is detected, a switching unit that switches the I signal and the Q signal to be processed may be further provided.

The symbol for detecting the phase difference may be selected for the estimation value so that the component of the intersymbol interference is suppressed.

The phase difference between the symbols may be averaged to minimize the component of the intersymbol interference.

The component based on the intersymbol interference of the estimation value can be controlled by subtracting the value corresponding to the component of the intersymbol interference stored in advance.

The reception signal is detected on the basis of a signal of a frequency controlled in accordance with the estimation value to synchronize the frequency, and a frequency band of the detected signal is limited, whereby the phase of the signal in which the frequency is limited can be synchronized.

The receiving apparatus can receive advanced broadband satellite broadcasting.

An aspect of the present technology is a method of reception that includes a step of estimating an estimation value of a frequency error of a symbol included in a synchronization signal of a reception signal and a step of controlling a component based on intersymbol interference of the estimation value.

An aspect of the present technology is a demodulating apparatus including an estimation unit that estimates an estimation value of a frequency error of a symbol included in a synchronization signal of a reception signal and a control unit that controls a component based on intersymbol interference of the estimation value.

In an aspect of the present technology, an estimation value of a frequency error of a symbol included in a synchronization signal of a reception signal is estimated, and a component based on intersymbol interference of the estimation value is controlled.

EFFECTS OF THE INVENTION

As described above, according to an aspect of the present technology, influence exerted by intersymbol interference can be suppressed.

Note that the effects described herein are merely examples and not limited, and additional effects may be included.

BRIEF DESCRIPTION OF DRAWINGS

Fig. 1 is a diagram illustrating a configuration of an advanced broadband satellite broadcasting system.
Fig. 2 is a block diagram illustrating a configuration of a receiving apparatus according to the present technology.
Fig. 3 is a diagram illustrating a frame configuration of advanced broadband satellite broadcasting.
Fig. 4 is a flowchart illustrating a reception process.
Fig. 5 is a block diagram illustrating a configuration of a satellite demodulation unit according to the present technology.
Fig. 6 is a block diagram illustrating a configuration of a matched filter according to the present technology.
Fig. 7 is a flowchart illustrating a synchronization process according to the present technology.
Fig. 8 is a diagram illustrating a phase difference between symbols.
Fig. 9 is a diagram illustrating a phase difference between symbols in a case where there is a frequency error.
Fig. 10 is a diagram illustrating intersymbol interference.
Fig. 11 is a diagram illustrating influence exerted by intersymbol interference on the frequency error.
Fig. 12 is a block diagram illustrating a configuration of a frequency estimation unit according to the present technology.
Fig. 13 is a flowchart illustrating a frequency error estimation process according to the present technology.
Fig. 14 is a diagram illustrating detection of the phase difference between symbols.
Fig. 15 is another diagram illustrating the detection of the phase difference between symbols.
Fig. 16 is another block diagram illustrating the configuration of the frequency estimation unit according to the present technology.

Fig. 17 is another diagram illustrating the phase difference between symbols.

Fig. 18 is another flowchart illustrating the frequency error estimation process according to the present technology.

Fig. 19 is a chart illustrating influence exerted by a tap.

Fig. 20 is another block diagram illustrating the configuration of the satellite demodulation unit according to the present technology.

Fig. 21 is a flowchart illustrating a synchronization process.

Fig. 22 is another block diagram illustrating the configuration of the frequency estimation unit according to the present technology.

Fig. 23 is another flowchart illustrating the frequency error estimation process according to the present technology.

Fig. 24 is a diagram illustrating an inversion of an I signal and a Q signal.

Fig. 25 is another block diagram illustrating the configuration of the frequency estimation unit according to the present technology.

Fig. 26 is another diagram illustrating the inversion of the I signal and the Q signal.

Fig. 27 is another flowchart illustrating the frequency error estimation process according to the present technology.

Fig. 28 is another diagram illustrating the inversion of the I signal and the Q signal.

Fig. 29 is another block diagram illustrating the configuration of the frequency estimation unit according to the present technology.

Fig. 30 is another flowchart illustrating the frequency error estimation process according to the present technology.

Fig. 31 is another block diagram illustrating the configuration of the frequency estimation unit according to the present technology.

Fig. 32 is another flowchart illustrating the frequency error estimation process according to the present technology.

MODE FOR CARRYING OUT THE INVENTION

Hereinafter, embodiments for implementing the present technology will be described. Note that descriptions will be given in the following order.

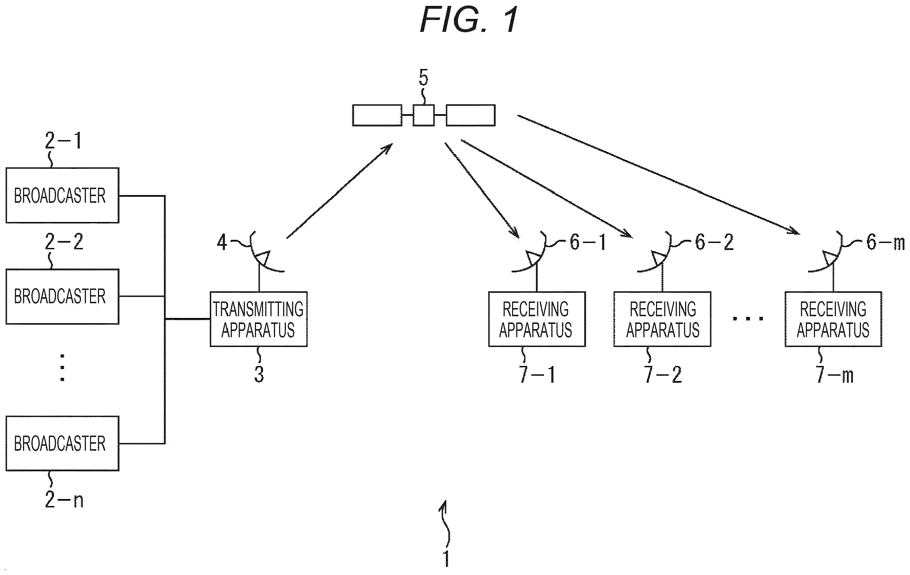

1. Advanced Broadband Satellite Broadcasting System (Figs. 1 to 4)

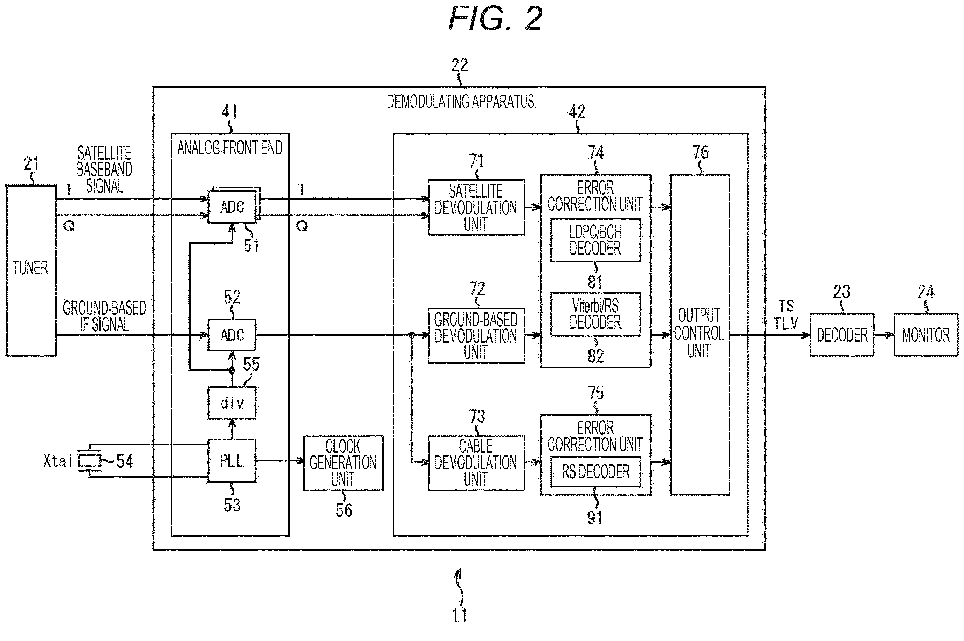

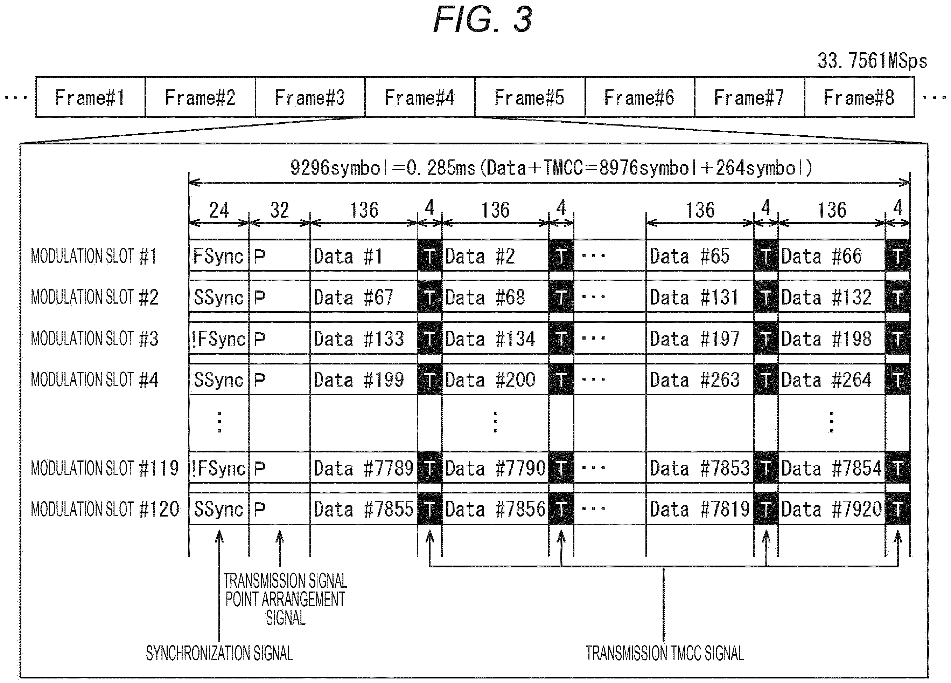

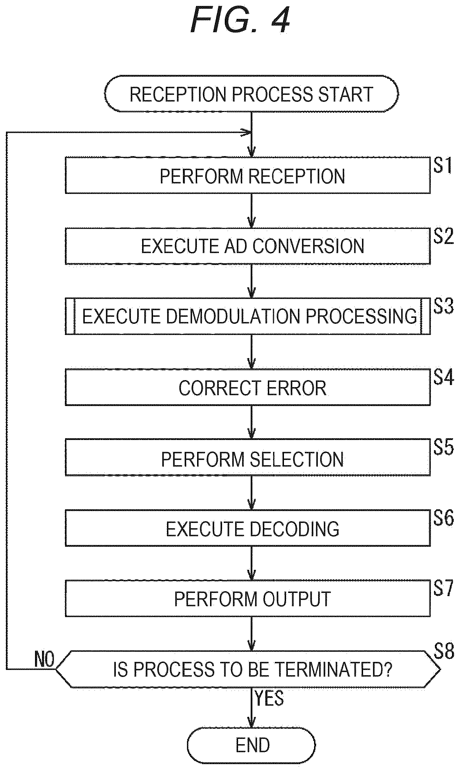

(1) Configuration of Advanced Broadband Satellite Broadcasting System (Fig. 1)
(2) Receiving Apparatus (Fig. 2)
(3) Configuration of Frame (Fig. 3)
(4) Operation of Reception (Fig. 4)

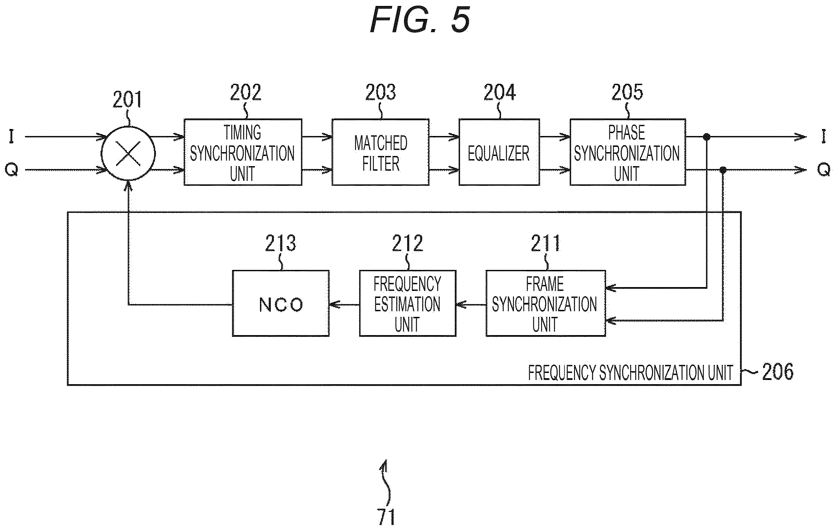

2. First Satellite Demodulation Unit (Figs. 5 to 19)

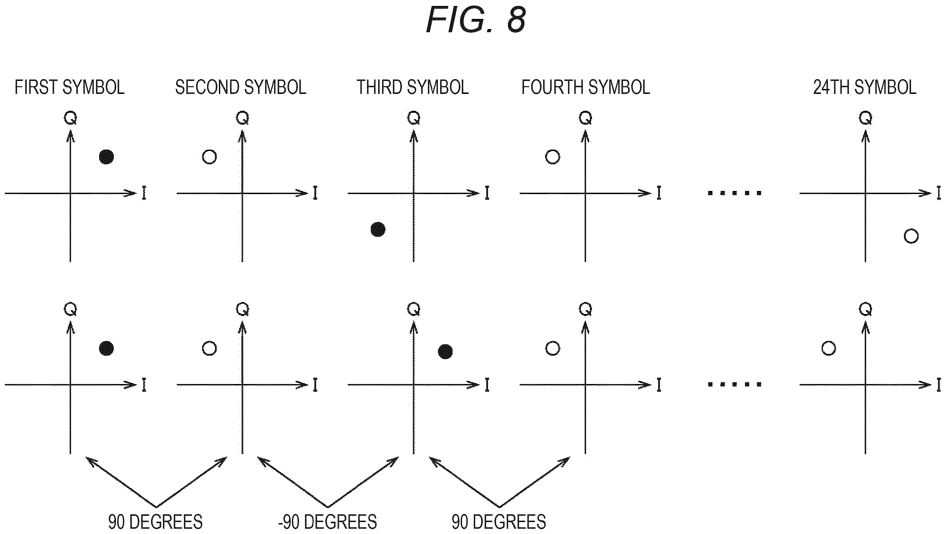

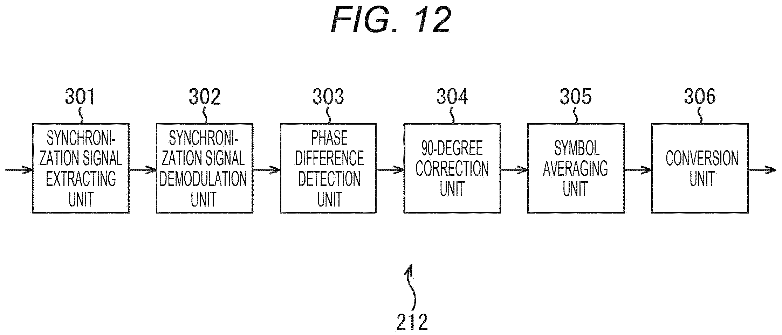

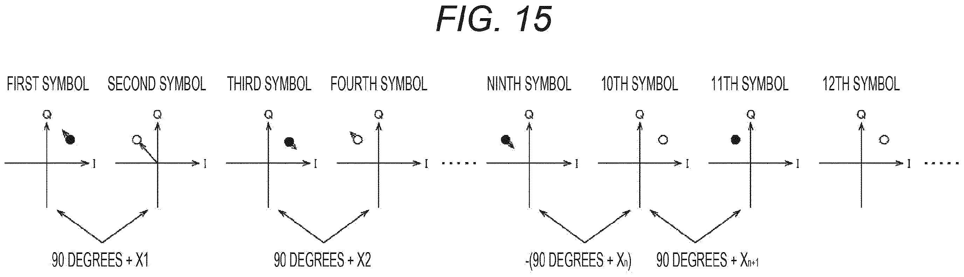

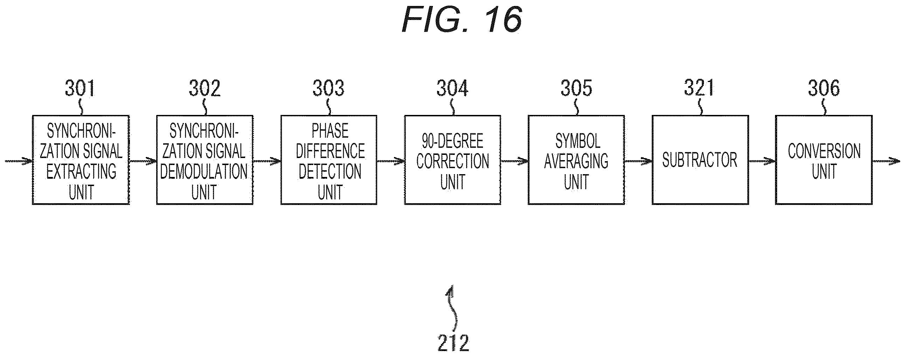

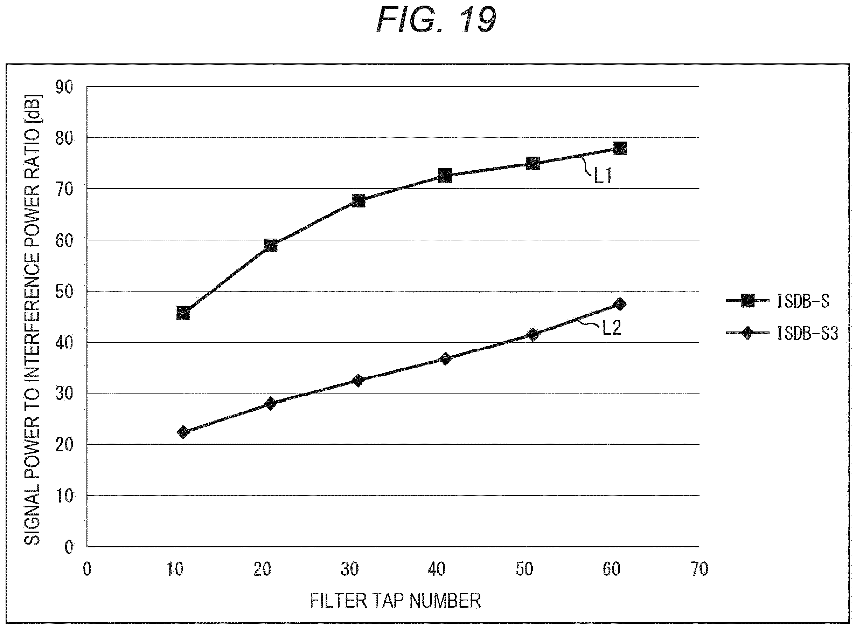

(1) Configuration and Operation of First Satellite Demodulation Unit (Figs. 5 to 7)
(2) Principle of Frequency Error Estimation (Figs. 8 to 11)
(3) First Frequency Estimation Unit (Case where distance K is two or more: Figs. 12 to 14)
(4) Second Frequency Estimation Unit (Case where symbol with minimum ISI average is selected: Fig. 15)
(5) Third Frequency Estimation Unit (Case of ISI subtraction: Figs. 16 to 18)
(6) Influence Exerted by the Number of Taps (Fig. 19)

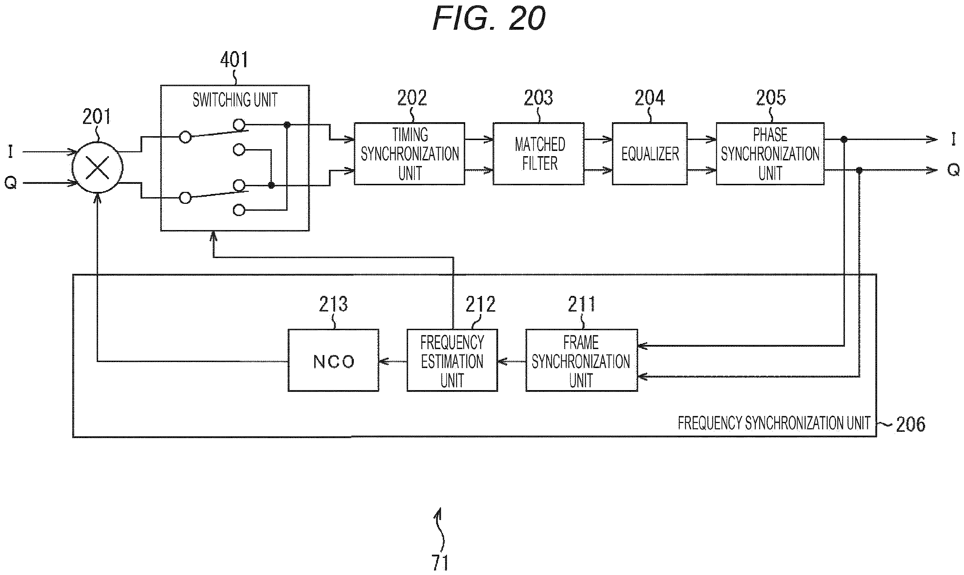

3. Second Satellite Demodulation Unit (Case of IQ inversion detection: Figs. 20 to 32)

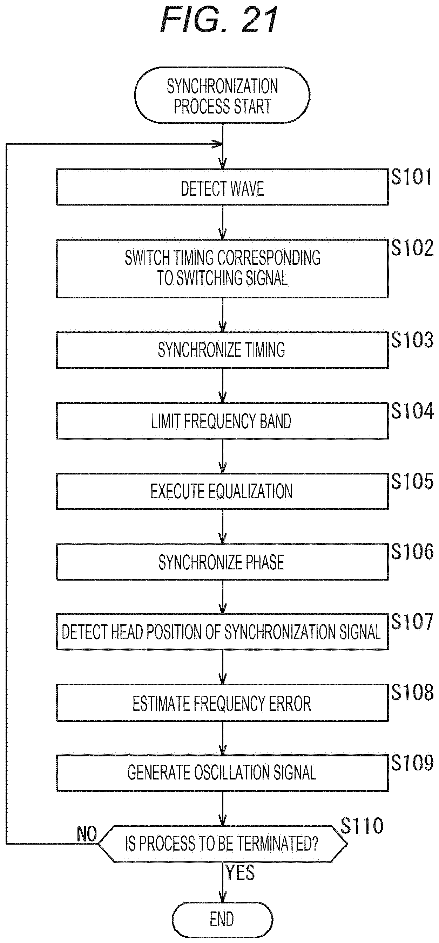

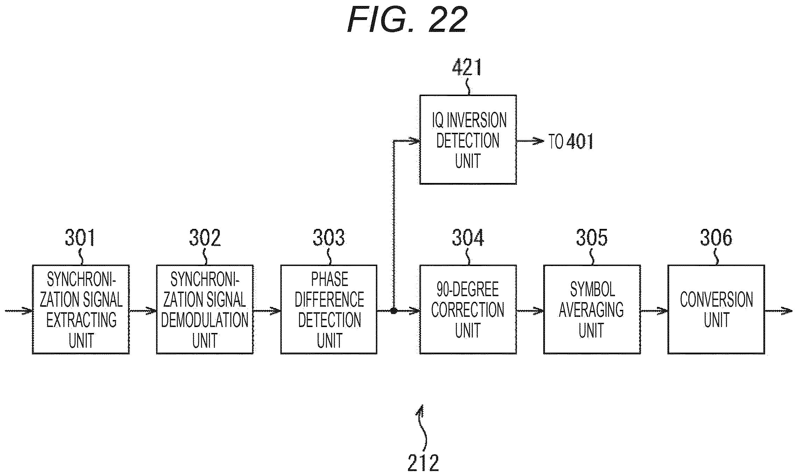

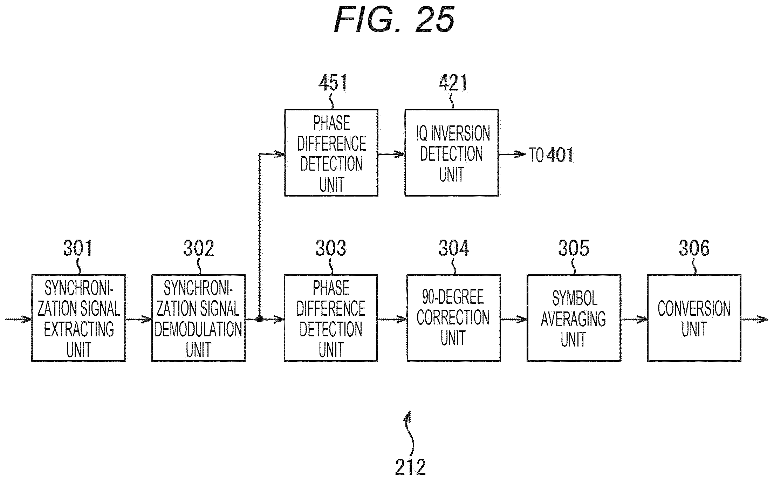

(1) Configuration and Operation of Second Satellite Demodulation Unit (Figs. 20 and 21)
(2) Fourth Frequency Estimation Unit (Case where IQ inversion is detected, and distance K is two or more and odd number: Figs. 22 to 24)
(3) Fifth Frequency Estimation Unit (Case where IQ inversion is detected, symbol with minimum ISI average is selected, and distance K is odd number: Figs. 15, 22, and 23)
(4) Sixth Frequency Estimation Unit (Case where IQ inversion is detected, and distance K is two or more and even number: Figs. 25 to 28)
(5) Seventh Frequency Estimation Unit (Case where IQ inversion is detected, symbol with minimum ISI average is selected, and distance K is even number: Figs. 15, 25, and 27)
(6) Eighth Frequency Estimation Unit (Case where IQ inversion is detected, ISI subtraction is performed, and distance K is odd number:
Figs. 29 and 30)
(7) Ninth Frequency Estimation Unit (Case where IQ inversion is detected, ISI subtraction is performed, and distance K is even number:
Figs. 31 and 32)

4. Others

<1. Advanced Broadband Satellite Broadcasting System (Figs. 1 to 4)>

(1) Configuration of Advanced Broadband Satellite Broadcasting System (Fig. 1)

Fig. 1 is a diagram illustrating a configuration of an advanced broadband satellite broadcasting system. In an advanced broadband satellite broadcasting system 1, broadcasters 2-1 to 2-n digitalize content to be broadcast and transmit it to a transmitting apparatus 3. Although the transmitting apparatus 3 is managed by an operator different from the broadcasters 2-1 to 2-n in many cases, it may be the same operator. A plurality of contents from the respective broadcasters 2-1 to 2-n is gathered as necessary, and is transmitted to a satellite 5 via an antenna 4. The satellite 5 is a broadcast satellite (BS) or a communication satellite (CS).

Note that, although only one antenna 4 is illustrated in Fig. 1, a plurality of antennas 4 of the same or different operator may be provided.

The satellite 5 applies predetermined processing onto the signal transmitted from the antenna 4 as necessary, and then transmits it to receiving apparatuses 7-1 to 7-m placed in each house or the like. The receiving apparatuses 7-1 to 7-m receive the signal from the satellite 5 via corresponding antennas 6-1 to 6-m.

(2) Receiving Apparatus (Fig. 2)

Fig. 2 is a block diagram illustrating a configuration of a receiving apparatus according to the present technology. This receiving apparatus 11 corresponds to each of the receiving apparatuses 7-1 to 7-m in Fig. 1.

The receiving apparatus 11 includes a tuner 21, a demodulating apparatus 22, a decoder 23, and a monitor 24. The tuner 21 receives the signal from the satellite 5, and outputs an I signal and a Q signal, which are baseband signals, to the demodulating apparatus 22. The tuner 21 has a function of also receiving a terrestrial broadcast signal, and outputs the intermediate frequency (IF) signal.

The demodulating apparatus 22 is configured by, for example, a large-scale integrated circuit (LSI), and includes an analog front end 41 and a demodulation block 42. The analog front end 41 carries out AD conversion of the respective I signal and the Q signal of the baseband signal from the tuner 21 using an analog-to-digital converter (ADC) 51, and outputs them to a satellite demodulation unit 71 of the demodulation block 42. An ADC 52 of the analog front end 41 carries out the AD conversion of an IF signal from the tuner 21, and outputs it to a ground-based demodulation unit 72 of the demodulation block 42.

The analog front end 41 includes a phase locked loop (PLL) 53. The PLL 53 includes a crystal 54, and generates a clock having a predetermined frequency. The clock generated by the PLL 53 is divided by a divider 55 to have a predetermined frequency, and is supplied to the ADCs 51 and 52. Furthermore, the clock generated by the PLL 53 is supplied to a clock generation unit 56. The clock generation circuit 56 generates a clock having a predetermined frequency required by each circuit, and supplies it to each circuit.

In the demodulation block 42, the satellite demodulation unit 71 orthogonally demodulates the I signal and the Q signal output from the ADC 51 of the analog front end 41, and outputs them to an error correction unit 74. Furthermore, the ground-based demodulation unit 72 demodulates the IF signal output from the ADC 52 of the analog front end 41, and outputs it to the error correction unit 74.

The error correction unit 74 includes a low-density parity-check (LDPC)/BCH decoder 81 and a Viterbi/Reed-Solomon (RS) decoder 74, and performs error correction processing on the signal from the satellite demodulation unit 71 and the ground-based demodulation unit 72 to output it to an output control unit 76.

Furthermore, in the demodulation block 42, a cable demodulation unit 73 demodulates a cable television signal supplied from the ADC 52, and outputs it to the error correction unit 75. The error correction unit 75 including a Reed-Solomon (RS) decoder 91 corrects the demodulated cable television signal, and outputs it to the output control unit 76.

The output control unit 76 selects any one of a satellite broadcast signal, a terrestrial broadcast signal, and the cable television signal on the basis of an instruction from a user, and outputs it to the decoder 23. The decoder 23 decodes a video signal and an audio signal input from the output control unit 76, and outputs it to the monitor 24. The monitor 24 displays an image corresponding to the input signal, and outputs a corresponding sound.

(3) Configuration of Frame (Fig. 3)

Fig. 3 is a diagram illustrating a frame configuration of the advanced broadband satellite broadcasting used in the advanced broadband satellite broadcasting system 1 in Fig. 1. Specifically, a frame configuration of the integrated services digital broadcasting for satellite 3 (ISDB-S3) method is illustrated. In the ISDB-S3, it is intended to transmit an image having resolution of what is called 4K and 8K. A transmission rate is 33.7561 MSps. A signal is transmitted in frame units, and one frame includes 120 modulation slots (modulation slots #1 to #120).

At the beginning of each modulation slot, a synchronization signal including 24 symbols is arranged. The synchronization signal is any one of three types of FSync, SSync, and !Sync. A synchronization signal of the modulation slot #1 is set to the FSync, and a synchronization signal of the modulation slot #2 is set to the SSync. In the modulation slot #3 and subsequent modulation slots, synchronization signals of the !FSync and the SSync are alternately arranged. The !FSync is a synchronization signal obtained by inverting the FSync.

Next to the synchronization signal, a pilot signal (indicated by P in Fig. 3) including 32 symbols is arranged. This is a transmission signal point arrangement signal that indicates an arrangement of a transmission signal point.

Following to this, 66 pairs of data including 136 symbols and a transmission and multiplexing configuration and control (TMCC) signal including four symbols are arranged. Therefore, one modulation slot includes 9,296 symbols, and has a length of 0.285 ms. Furthermore, data of one modulation slot (data #1 to data #66) includes 8,976 symbols, and the TMCC signal of one modulation slot includes 264 (= 4 × 66) symbols. In one frame, 7,920 data (data #1 to data #7,920), each of which includes 136 symbols, is transmitted, and 7,920 TMCC signals, each of which includes four symbols (31,680 symbols = 4 symbols × 7, 920 bursts), are transmitted. The number of symbols per frame is 1,115,520 (= 9,296 × 120).

A plurality of modulation schemes can be mixed within one frame in the advanced broadband satellite broadcasting. For example, a maximum of eight transmission modes can be defined within one frame, and a different modulation scheme can be adopted in an individual transmission mode. As the modulation scheme, any one of five types of modulation schemes, that is, binary phase shift keying (BPSK), quadrature phase shift keying (QPSK), 8PSK, 16 amplitude and phase shift keying (APSK), and 32APSK, can be used. However, the synchronization signal and a transmission TMCC signal are modulated using the $\pi/2$ shift BPSK method.

(4) Operation of Reception (Fig. 4)

Next, operation of the receiving apparatus 11 illustrated in Fig. 2 will be described with reference to Fig. 4. Fig. 4 is a flowchart illustrating a reception process. Note that an exemplary case of receiving a signal from the satellite 5 will be described in the following descriptions.

In step S1, the tuner 21 receives the signal transmitted via the satellite 5, and outputs a baseband signal including the I signal and the Q signal. In step S2, the ADC 51 carries out the AD conversion of the input I signal and the Q signal.

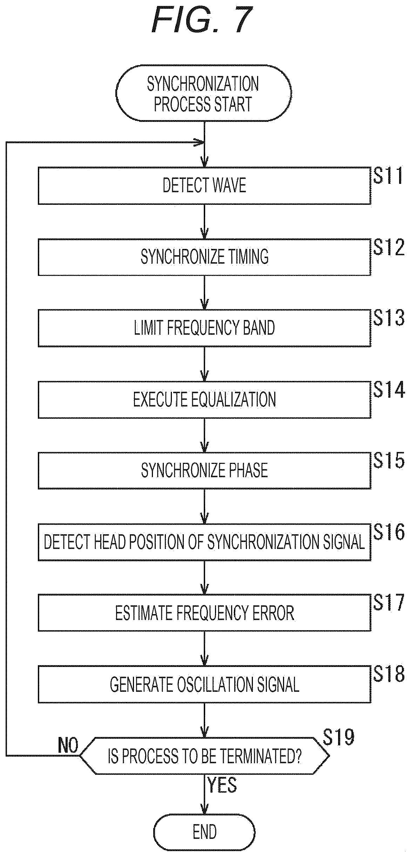

In step S3, the satellite demodulation unit 71 executes demodulation processing. As will be described later with reference to Fig. 7 and the like, the I signal and the Q signal are subject to frequency synchronization and phase synchronization. Then, the I signal and the Q signal are orthogonally demodulated.

In step S4, the error correction unit 74 performs error correction on the signal using the LDPC/BCH decoder 81 and the Viterbi/RS decoder 82. In step S5, in a case where reception of a satellite broadcast is indicated on the basis of an instruction from the user, the output control unit 76 selects the signal demodulated by the satellite demodulation unit 71.

In step S6, the decoder 23 decodes the video signal and the audio signal of the signal input from the output control unit 76.

In step S7, the monitor 24 outputs an image corresponding to the signal supplied from the decoder 23 on a display to perform display and output a sound from a speaker.

In step S8, it is determined whether or not to terminate the process on the basis of an instruction from the user, and in a case where a termination of the process is not instructed, the process returns to step S1 and the subsequent processing is repeated. In a case where the termination of the process is instructed, the process is terminated.

<2. First Satellite Demodulation Unit (Figs. 5 to 19)>

(1) Configuration and Operation of First Satellite Demodulation Unit (Figs. 5 to 7)

Next, a configuration of the satellite demodulation unit 71 in Fig. 2 will be described with reference to Fig. 5. Note that a configuration for frequency synchronization and phase synchronization before orthogonal demodulation will be mainly described.

Fig. 5 is a block diagram illustrating a configuration of the satellite demodulation unit according to the present technology. As illustrated in Fig. 5, in the satellite demodulation unit 71, a multiplier 201 performs frequency detection on a carrier wave input from the ADC 51 by multiplying an oscillation signal having a predetermined frequency oscillated and output by a numerical controlled oscillator (NCO) 213 of a frequency synchronization unit 206. A timing synchronization unit 202 adjusts a timing of a detection signal. In other words, a phase of a clock for sampling input from the PLL 53 to the ADC 51 is influenced by a state of the external environment, and is not necessarily stable. Therefore, the timing is adjusted so that the signal can be demodulated without excess or deficiency.

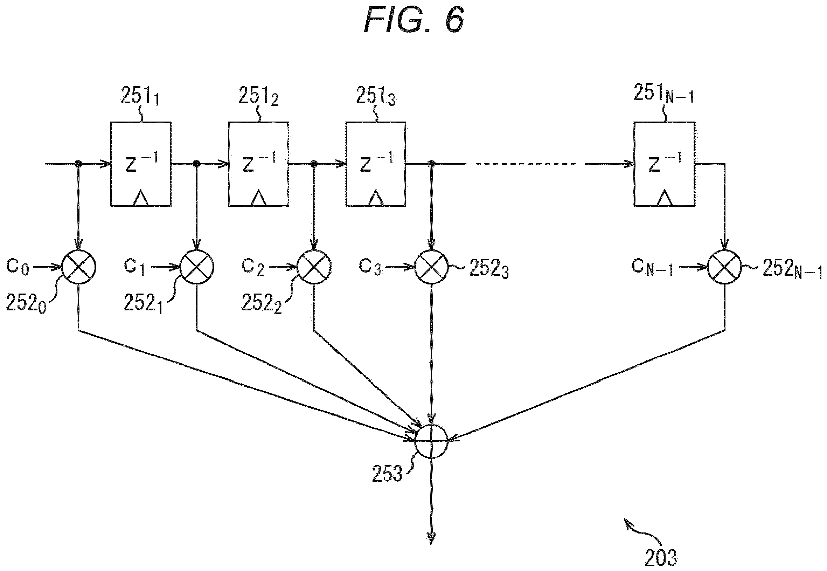

A matched filter 203 is a bandpass filter, which allows only a signal having a predetermined frequency band to pass to maximize an SN. The matched filter 203 is configured as illustrated in Fig. 6, for example. Fig. 6 is a block diagram illustrating a configuration of the matched filter according to the present technology. As illustrated in Fig. 6, the matched filter 203 includes a finite impulse response (FIR) filter.

An input signal is sequentially delayed by one clock by a delay unit $251_1$ to a delay unit $251_{N-1}$, and is output to the subsequent stage. A multiplier $252_0$ multiplies the input I signal or the Q signal by a coefficient Co. Multipliers $252_1$ to $252_{N-1}$ multiply the I signals output from the corresponding delay units $251_1$ to $251_{N-1}$ by coefficients $C_1$ to $C_{N-1}$. An output from each multiplier $252_i$ is added by an adder 253. One delay unit $251_i$ (i = 1, 2, ..., N-1) and one multiplier $252_i$ (i = 1, 2, ..., N-1) form a tap.

Setting a value of the input signal to be x[n], an output y[n] if the adder 253 is expressed by the following formula.

$$y[n] = C_0 \cdot x[n] + C_1 \cdot x[n-1] + C_2 \cdot x[n-2] + \cdots + C_{N-1} \cdot x[n-(N-1)] \qquad (1)$$

In the advanced broadband satellite broadcasting, a roll-off rate of the matched filter 203 is required to be 0.03. Accordingly, the number of taps increases. However, in the case of the present embodiment, the number of taps of the matched filter 203 is not increased as much as the case of the roll-off rate of 0.03. In other words, it includes a smaller number of taps. As a result, the frequency band to be passed through cannot be made sufficiently narrow, and intersymbol interference occurs in an unchanged condition, whereby the roll-off rate of 0.03 cannot be eventually achieved. Therefore, in the present embodiment, a frequency estimation unit 212 performs control to limit the influence exerted by the intersymbol interference, thereby eventually achieving a function equivalent to the case of the roll-off rate of 0.03.

An equalizer 204 in Fig. 5 adjusts the signals such that a frequency response becomes equal at each frequency. A phase synchronization unit 205 includes a PLL, and synchronizes a phase of the carrier wave of the reception signal input to the multiplier 201 with a phase of the oscillation signal output from the NCO 213 to the multiplier 201.

The frequency synchronization unit 206 performs adjustment such that the frequency of the carrier wave of the reception signal input to the multiplier 201 is synchronized with the frequency of the oscillation signal output from the NCO 213 to the multiplier 201. Accordingly, a frame synchronization unit 211 detects the head position of the synchronization signal. For example, each square sum of a synchronous detection value of the I signal (result of correlation with FSync, SSync, and !FSync) and a synchronous detection value of the Q signal (result of correlation with FSync, SSync, and !FSync) is calculated. A position in which a value of the square sum is the largest is set to be the head position of the modulation slot. The frequency is detected using an angle of the symbol on the complex plane of the synchronous detection value (i.e., represented by coordinates (synchronous detection value of I signal and synchronous detection value of Q signal)).

The frequency estimation unit 212 detects a phase difference between the symbols of the synchronization signal by operation correlation, and estimates a frequency error on the basis of the detected phase difference. The NCO 213 generates a signal having a frequency corresponding to the frequency error estimated by the frequency estimation unit 212, and outputs it to the multiplier 201.

A coarse adjustment is performed such that the frequencies of the carrier wave of the reception signal and the oscillation signal output from the NCO 213 to the multiplier 201 are synchronized by the loop including the frequency synchronization unit 206, and a fine adjustment is performed such that the phases are synchronized by the phase synchronization unit 205. A signal having been subject to the phase synchronization by the phase synchronization unit 205 is output to the subsequent stage (not illustrated), and is orthogonally demodulated.

Next, synchronous operation of the satellite demodulation unit 71 in Fig. 5 will be described with reference to Fig. 7. Fig. 7 is a flowchart illustrating a synchronization process.

In step S11, the multiplier 201 multiplies a carrier wave signal of the reception signal by the oscillation signal adjusted to have a predetermined frequency generated by the NCO 213, and detects the carrier wave.

In step S12, the timing synchronization unit 202 synchronizes the timing of the detection signal. In other words, the timing of the signal output is adjusted such that the reception signal can be demodulated without excess or deficiency even in a case where the phase of the clock for sampling input from the PLL 53 to the ADC 51 in Fig. 2 is influenced by a state of the external environment and is unstable.

In step S13, the matched filter 203 limits the frequency band of the reception signal in which the timing is adjusted, and allows only the signal having the predetermined frequency band to pass.

In step S14, the equalizer 204 equalizes the signals with limited frequency band such that the frequency response becomes equal at each frequency.

In step S15, the phase synchronization unit 205 including the PLL synchronizes the phase of the carrier wave of the reception signal input to the multiplier 201 with the phase of the oscillation signal output from the NCO 213 to the multiplier 201, is output to the subsequent stage, and performs orthogonal detection.

In step S16, the frame synchronization unit 211 of the frequency synchronization unit 206 detects the head position of the synchronization signal. In other words, the head position of the FSync, SSync, and !FSync is detected.

The frequency estimation unit 212 estimates the frequency error on the basis of differential correlation. In other words, the frequency error is estimated on the basis of the phase difference between the symbols of the synchronization signal including 24 symbols starting from the head position detected by the frame synchronization unit 211, and a control signal having a value corresponding to the error is generated. In the case of the present embodiment, the influence exerted by the intersymbol interference is controlled to be reduced in estimating the frequency error. Accordingly, even in a case where the number of taps of the matched filter 203 is reduced, the SN similar to the number of taps of the case where the roll-off rate is set to 0.03 can be achieved.

In step S18, the NCO 213 generates the oscillation signal having the frequency corresponding to the frequency error on the basis of the control signal supplied from the frequency estimation unit 212. The oscillation signal is output to the multiplier 201.

In step S19, the multiplier 201 determines whether or not to terminate the process on the basis of an instruction from the user. In a case where a termination of the process is not instructed, the process returns to step S11 and the subsequent processing is repeated.

By the process described above being repeated, control is performed such that the error between the frequency of the carrier wave of the reception signal input to the multiplier 201 and the frequency of the oscillation signal output from the NCO 213 to the multiplier 201 becomes small (coarse adjustment of initial demodulation is performed) and also that the phase difference therebetween becomes small (finely adjusted).

Note that, although the operation has been described according to each block in Fig. 5 in the above descriptions, in practice, the adjustment is performed in the order of the timing adjustment by the timing synchronization unit 202, the frequency synchronization by the frequency synchronization unit 206, and the phase synchronization by the phase synchronization unit 205.

(2) Principle of Frequency Error Estimation (Figs. 8 to 11)

Next, a principle of frequency error estimation performed in step S17 in Fig. 7 by the frequency estimation unit 212 in Fig. 5 will be described. Fig. 8 is a diagram illustrating the phase difference between the symbols. In an ideal case where no frequency error exists in the carrier wave and the oscillation signal, a signal point on the complex plane (signal point constellation diagram) represented by an I axis and a Q axis in each of the 24 symbols (Sync sequence) included in the synchronization signal is as illustrated in the upper part in Fig. 8. In other words, with respect to the signal point on the complex plane, the phase difference between adjacent symbols advances or delays by 90 degrees such as the upper right (first quadrant) in a first symbol, the upper left (second quadrant) in a second symbol, the lower left (third quadrant) in a third symbol, the upper left (second quadrant) in a fourth symbol, ..., and the lower right (fourth quadrant) in a 24th symbol.

Therefore, the phase difference between the adjacent symbols after the modulation of the synchronization signal is released is as illustrated in the lower part in Fig. 8. In other words, the signal point is the upper right (first quadrant) in the first symbol, the upper left (second quadrant) in the second symbol, the upper right (first quadrant) in the third symbol, ..., and the upper left (second quadrant) in the 24th symbol. Therefore, the phase difference between the first symbol and the second symbol is +90 degrees, the phase difference between the second symbol and the third symbol is -90 degrees, the phase difference between the third symbol and the fourth symbol is +90 degrees, and so on, and the phase difference of +90 degrees and -90 degrees alternately appears.

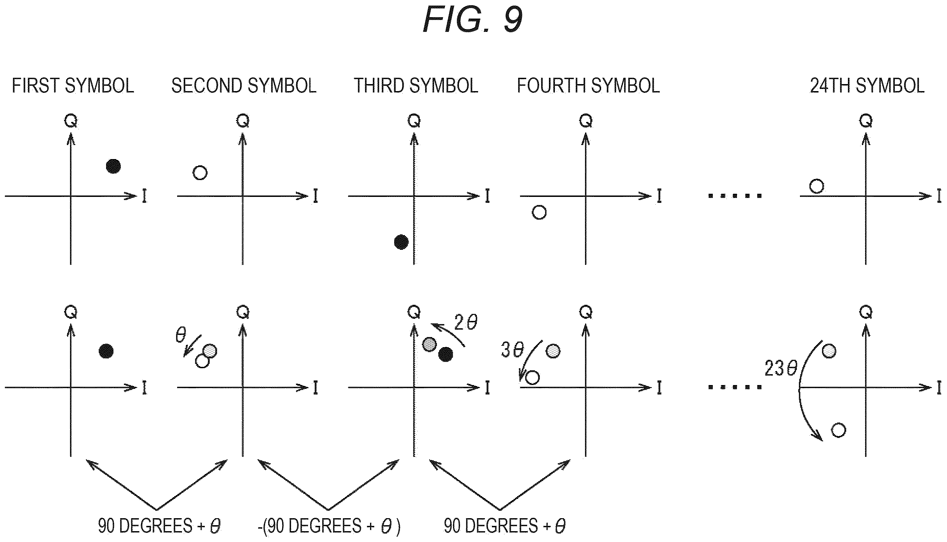

Meanwhile, in a case where there is a frequency error in the carrier wave and the oscillation signal, it is as follows. Fig. 9 is a diagram illustrating the phase difference between the symbols in a case where there is a frequency error. The upper part in Fig. 9 illustrates a state before the modulation is released. As is apparent from comparing the upper part in Fig. 9 with the upper part in Fig. 8, the position of the signal point in Fig. 9 is slightly shifted from the position of the signal point in Fig. 9. That is, the phase is shifted.

The lower part in Fig. 9 illustrates a state after the modulation is released. In the second symbol, the phase advances by an angle $\theta$ from the phase of a case where there is no frequency error (phase in the lower part in Fig. 8). In the third symbol, the phase advances by an angle $2\theta$ from the phase of the case where there is no frequency error (phase in the lower part in Fig. 8), and in the fourth symbol, the phase advances by an angle $3\theta$ from the phase of the case where there is no frequency error (phase in the lower part in Fig. 8). Further, in the 24th symbol, the phase advances by an angle $23\theta$ from the phase of the case where there is no frequency error (phase in the lower part in Fig. 8).

Therefore, the phase difference between the first symbol and the second symbol is +(90 degrees + $\theta$), the

phase difference between the second symbol and the third symbol is -(90 degrees + θ), and the phase difference between the third symbol and the fourth symbol is +(90 degrees + θ). Likewise, +(90 degrees + θ) and -(90 degrees + θ) alternately appear as the phase difference. Therefore, the frequency error can be detected by detecting this deviation angle θ.

In other words, a frequency error Δf can be obtained from the deviation angle θ on the basis of the following formula.

$$\Delta f = (\theta/360) \times 33.7561 \qquad\qquad (2)$$

Note that 33.7561 (MHz) is a symbol rate.

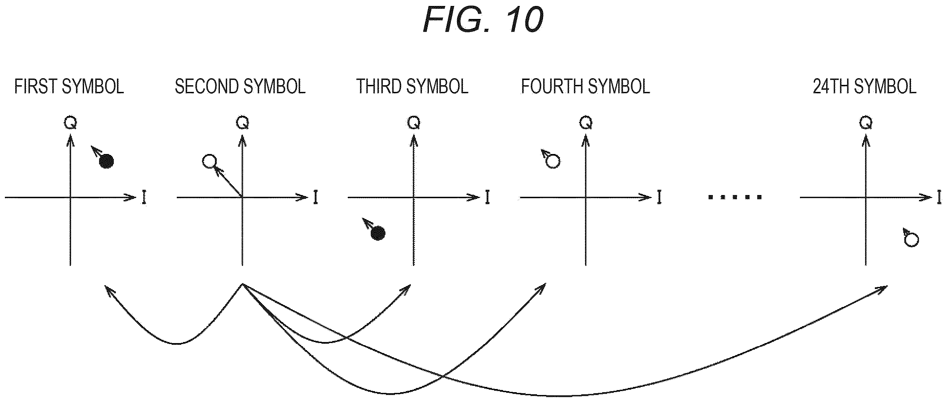

Next, the intersymbol interference will be described. Fig. 10 is a diagram illustrating the intersymbol interference. The intersymbol interference indicates that a signal of one symbol leaks into a signal of another symbol. Fig. 10 illustrates a state in which no frequency error exists and the signal of the second symbol leaks into the other first symbol, third symbol, fourth symbol, ..., and 24th symbol.

Leakage can be represented by a vector. In other words, a vector indicated by an arrow in the drawing representing the signal point of the second symbol is added to another symbol such as another first symbol, third symbol, fourth symbol, ..., and 24th symbol at a predetermined ratio. A leakage amount corresponds to a distance between the symbols, which decreases as the distance increases. In Fig. 10 as well, the longer the distance becomes, the shorter the length of the vector becomes.

Note that, although the leakage of the second symbol into another symbol is illustrated in Fig. 10, the symbols other than the second symbol also leak into other symbols in a similar manner.

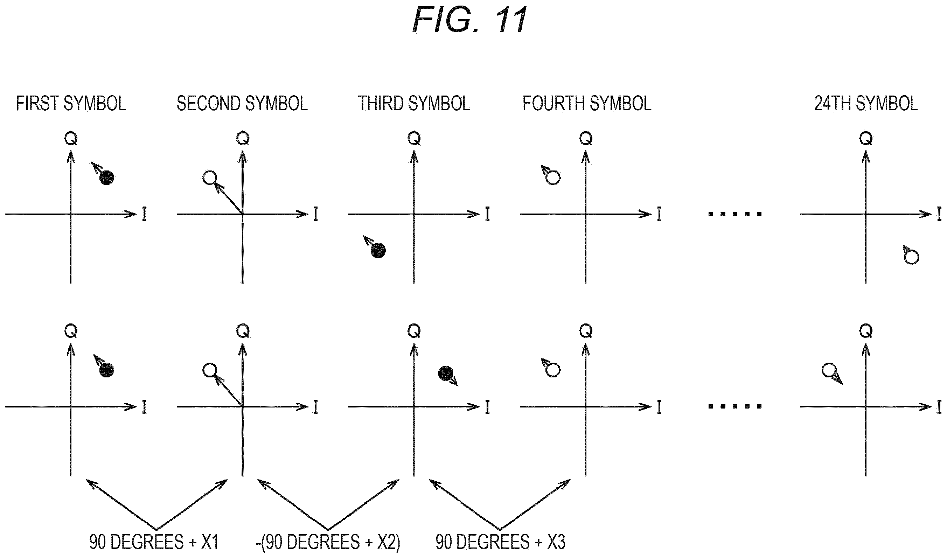

In a case where such intersymbol interference occurs, it is erroneously detected as a frequency error. Fig. 11 is a diagram illustrating the influence exerted by the intersymbol interference on the frequency error. The upper part in Fig. 11 illustrates a state before the modulation is released in a case where no frequency error exists and the intersymbol interference occurs.

The lower part in Fig. 11 illustrates a state in which the modulation of the Sync sequence in the upper part in Fig. 11 is released. As illustrated in the lower part in Fig. 11, the phase difference between the first symbol and the second symbol is +(90 degrees + $X_1$), the phase difference between the second symbol and the third symbol is -(90 degrees + $X_2$), the phase difference between the third symbol and the fourth symbol is +(90 degrees + $X_3$), and so on, and the phase difference of +(90 degrees + $X_n$) and -(90 degrees + $X_{n-1}$) alternately appears. Therefore, in a case where the intersymbol interference occurs, this angle $X_j$ (j = 1, 2, 3, ..., 23) is erroneously detected as a frequency error. In the present embodiment, the frequency estimation unit 212 is controlled to suppress a component based on the intersymbol interference.

(3) First Frequency Estimation Unit (Case where distance K is two or more: Figs. 12 to 14)

Next, a configuration of the frequency estimation unit 212 in Fig. 5 will be described. Fig. 12 is a block diagram illustrating the configuration of the frequency estimation unit according to the present technology. In the frequency estimation unit 212, a synchronization signal extracting unit 301 extracts a synchronization signal from the signal supplied from the frame synchronization unit 211. A synchronization signal demodulation unit 302 demodulates the synchronization signal extracted by the synchronization signal extracting unit 301. A phase difference detection unit 303 detects a phase difference from the synchronization signal demodulated by the synchronization signal demodulation unit 302. As a result, the component based on the intersymbol interference is controlled.

A 90-degree correction unit 304 corrects 90 degrees out of the phase differences detected by the phase difference detection unit 303. A symbol averaging unit 305 calculates an average value of the phase difference between the symbols from the output of the 90-degree correction unit 304. A conversion unit 306 converts the average value calculated by the symbol averaging unit 305 into a corresponding frequency error. In other words, an estimation value corresponding to the estimated frequency error is output.

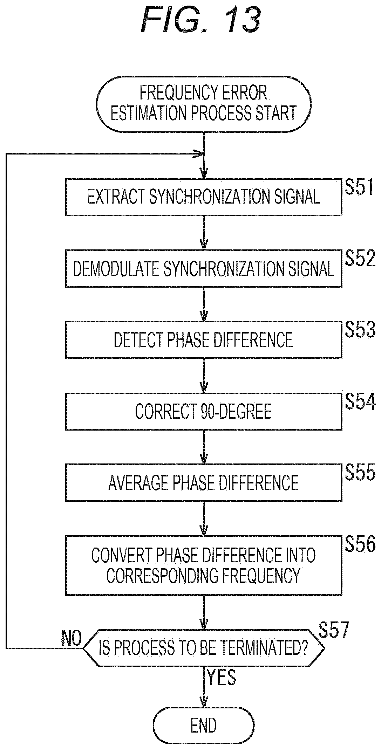

Next, operation of the frequency estimation unit 212 in Fig. 12 will be described with reference to Fig. 13. Fig. 13 is a flowchart illustrating a frequency error estimation process according to the present technology. In step S51, the synchronization signal extracting unit 301 extracts the synchronization signal. In other words, from the head position of the synchronization signal detected by the frame synchronization unit 211 serving as a reference, 24 symbols of the FSync, SSync, and !FSync are extracted.

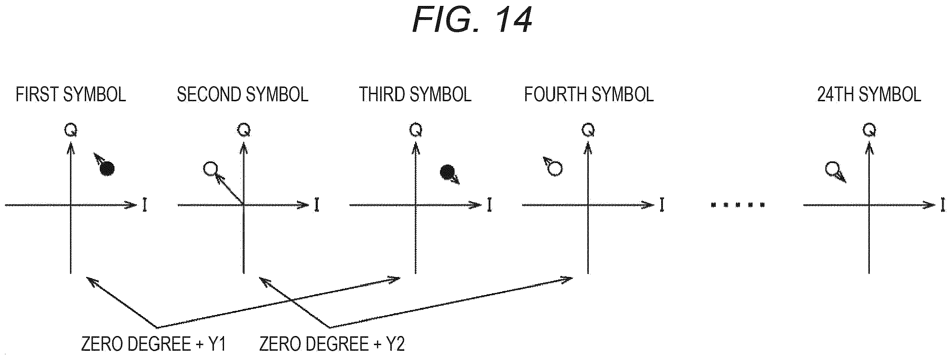

In step S52, the synchronization signal demodulation unit 302 demodulates the synchronization signal. In other words, the synchronization signal having been subject to π/2 shift BPSK modulation is demodulated. In step S53, the phase difference detection unit 303 detects the phase difference of the synchronization signal. This method of detecting the phase difference will be described with reference to Fig. 14.

Fig. 14 is a diagram illustrating the detection of the phase difference between the symbols. Fig. 14 illustrates a state after the modulation is released in a case where no frequency error exists. In the present embodiment, as illustrated in Fig. 14, a phase difference between the symbols two-symbol away from each other (distance K between symbols (to be described later with reference to Formula 3) is two), not the adjacent symbols, is detected. In other words, the phase difference (zero degree + $Y_1$) between the first symbol and the third symbol, the phase difference (zero degree + $Y_2$) between the second symbol and the fourth symbol, ..., and the phase difference (zero degree + $Y_{22}$) (not illustrated) between the 22th symbol and the 24th symbol are detected, respectively.

A component value $Y_i$ (i = 1, 2, ..., 22) that appears in spite of the absence of the frequency error is based on the intersymbol interference. The value Yi in the case where the phase difference between the symbols two-symbol away from each other is detected becomes negligibly small compared with the value $X_j$ (j = 1, 2, ..., 23) in the case where the phase difference between the adjacent symbols in Fig. 11 (distance K between symbols is one) is detected. Therefore, the influence exerted by the intersymbol interference can be ignored. The larger the distance K between the symbols becomes, the smaller the influence of the intersymbol interference becomes.

In Fig. 14, the phase difference between the symbols two-symbol away from each other (distance K between symbols is two) is detected. However, it may be a phase difference between the symbols three or more symbols away from each other (distance K between symbols is three or more). In a case where the phase difference between the symbols two or more symbols away from each other (distance K between symbols is two or more) is detected, the frequency error is expressed by the following formula.

$$\Delta f = (\theta/360) \times (33.7561/K) \qquad (3)$$

Note that K represents the distance between the separated symbols. In the example in Fig. 14, K = 2. The case of K = 1 is a case where the phase difference between the adjacent symbols is detected. In this case, the formula (3) is the same as the formula (2). As will be described with reference to a formula (4), $\theta$ is an angle (deviation angle) corresponding to the frequency error.

In the case where the distance K is an even number, the angle is estimated with a deviation amount from zero degree, and in the case of an odd number, the angle is estimated from a deviation amount from 90 degrees.

Returning to Fig. 13, in step S54, the 90-degree correction unit 304 corrects 90 degrees from the detected phase. That is, as illustrated in Fig. 11, in a case where the component of 90 degrees such as (90 degrees + $X_i$) and -(90 degrees + $X_{i+1}$) appears in the phase difference between the symbols, control (removal) is performed such that the value does not affect the average value of the phase difference. However, in the in the exemplary case in Fig. 14, since the value to appear is zero degree, substantially no processing is performed in the 90-degree correction unit 304, and the signal is output as it is.

In step S55, the symbol averaging unit 305 averages the phase difference. That is, in the exemplary case in Fig. 14, since 24 symbols are processed and 22 phase differences between the symbols are obtained, the average value thereof is calculated. Specifically, the average value of the value Yi illustrated in Fig. 14 is calculated as the deviation angle $\theta$ corresponding to the frequency error as expressed by the following formula.

$$\theta = (Y_1 + Y_2 + Y_3 + ... Y_{22})/22 \qquad (4)$$

In step S56, the conversion unit 306 converts the phase difference into the corresponding frequency. In other words, using the deviation angle $\theta$ obtained in the processing of step S55, the frequency error $\Delta f$ is calculated according to the formula (3). The NCO 213 in Fig. 5 to which the frequency error $\Delta f$ is input generates an oscillation signal having the frequency corresponding to the frequency error $\Delta f$, and supplies it to the multiplier 201. In this manner, the frequency of the oscillation signal is controlled for each modulation slot to be synchronized with the synchronization signal arranged at the beginning of each modulation slot.

Note that the oscillation frequency can be controlled by a value obtained by adding the frequency error to a predetermined reference value.

In step S57, the synchronization signal extracting unit 301 determines whether or not to terminate the process on the basis of an instruction from the user. In a case where a termination of the process is not instructed from the user, the process returns to step S51 and the subsequent processing is repeated. In a case where the termination of the process is instructed, the process is terminated.

As described above, deviation of the frequency error in the differential correlation method can be reduced.

(4) Second Frequency Estimation Unit (Case where symbol with minimum ISI average is selected: Fig. 15)

In the exemplary case in Fig. 14, the phase difference between the symbols of the distance K = 2 to reduce the influence exerted by the intersymbol interference. However, the phase difference between the symbols may be detected by selecting only an optional predetermined one of the 24 symbols. A configuration of the frequency estimation unit 212 in this case is similar to the case illustrated in Fig. 12. However, the phase difference detection unit 303 selects a symbol for detecting the phase difference. In this case, a symbol in which the average value of the component of the intersymbol interference is minimized is selected.

Among the phase differences between the symbols, a component generated by the intersymbol interference (e.g., value $X_i$ in Fig. 11 in the case of the phase difference between the adjacent symbols) is dependent on an intersymbol interference amount (leakage amount) and a synchronization signal pattern (i.e., pattern of FSync, SSync, and !FSync). The intersymbol interference amount (leakage amount) is determined if a configuration of the matched filter 203 is determined, and the patterns of the FSync, SSync, and !FSync are determined in advance by standards. Accordingly, in the receiving apparatus 11, a symbol in which the average value of the component (value $X_i$) generated by the intersymbol interference is minimized (ideally zero) can be identified by calculation from among the 24 symbols. Then, an optional combination of an arbitrary number of the symbols is selected as a phase difference to be detected. In other words, an optional combination of an arbitrary number of the symbols, such as first, second, fifth, ..., and 23th, for example is selected so that optimum phase difference detection is performed. Therefore, in this case, the distance K = 1 can be set.

Fig. 15 is a diagram illustrating the detection of the phase difference between the symbols. In the exemplary case in Fig. 15, the first symbol, the second symbol, the third symbol, the fourth symbol, ..., the ninth symbol, the 10th symbol, the 11th symbol, and the like are selected. Further, the distance K = 1 is set. That is, the phase difference (90 degrees + $X_1$) between the first symbol and the second symbol, the phase difference (zero degree + $X_2$) between the third symbol and the fourth symbol, ..., the phase difference -(90 degrees + $X_n$) between the ninth symbol and the 10th symbol, the phase difference (90 degrees + $X_{n+1}$) between the 10th symbol and the 11th symbol, and the like are detected.

In the phase difference detection unit 303 in Fig. 12 (step S53 in Fig. 13), the phase difference between the selected symbols is detected, and in the symbol averaging unit 305 (step S55), the average value of the phase difference between the selected symbols is calculated. Since it is the phase difference between the selected symbols, this average value contains no or very little intersymbol interference component. Other processing is similar to those illustrated in Fig. 13, and descriptions thereof will be omitted.

(5) Third Frequency Estimation Unit (Case of ISI subtraction: Figs. 16 to 18)

As described above, the phase difference between the symbols two or more symbols away from each other is detected in the exemplary case in Fig. 14, and an optional symbol for detecting the phase difference is selected in the exemplary case in Fig. 15, thereby reducing the influence exerted by the intersymbol interference. Further, the frequency estimation unit 212 can be configured as illustrated in Fig. 16 to reduce the influence exerted by the intersymbol interference.

Fig. 16 is a block diagram illustrating the configuration of the frequency estimation unit according to the present technology. As is apparent from comparing Fig. 16 with Fig. 12, the frequency estimation unit 212 in Fig. 16 is different from the frequency estimation unit 212 in Fig. 12 in that a subtractor 321 is disposed between the symbol averaging unit 305 and the conversion unit 306. Other configurations are similar to those of the frequency estimation unit 212 in Fig. 12, and descriptions thereof will be omitted.

The subtractor 321 stores a predetermined value in advance, subtracts the stored value from the average value calculated by the symbol averaging unit 305, and outputs it to the conversion unit 306. This stored value is set to a value corresponding to the average value of the component (value $X_i$) generated by the intersymbol interference.

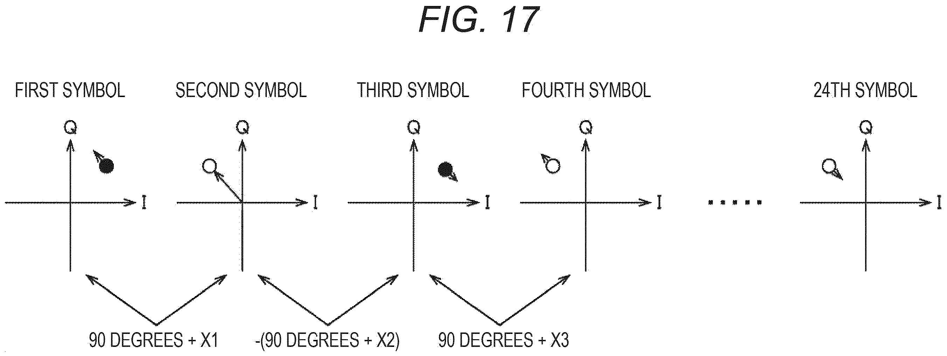

Here, the stored value will be described with reference to Fig. 17. Fig. 17 is a diagram illustrating the phase difference between the symbols. Fig. 17 illustrates a state after the modulation is released in a case where no frequency error exists. As illustrated in Fig. 17, the phase difference between the two symbols in the case where no frequency error exists is (90 degrees + $X_1$) between the first symbol and the second symbol, -(90 degrees + $X_2$) between the second symbol and the third symbol, (90 degrees + $X_3$) between the third symbol and the fourth symbol, and so on.

As described above, the component (value $X_i$) generated by the intersymbol interference is dependent on the intersymbol interference amount (leakage amount) and the synchronization signal pattern (i.e., pattern of FSync, SSync, and !FSync). Accordingly, in a case where the phase difference detection unit 303 detects the phase difference between the adjacent symbols, the average value of the values $X_1$, $X_2$, $X_3$, ..., and $X_{23}$ in Fig. 17, that is, the average value of the intersymbol interference component, is set to be the stored value. This average value can be obtained by calculation, experiment, and the like.

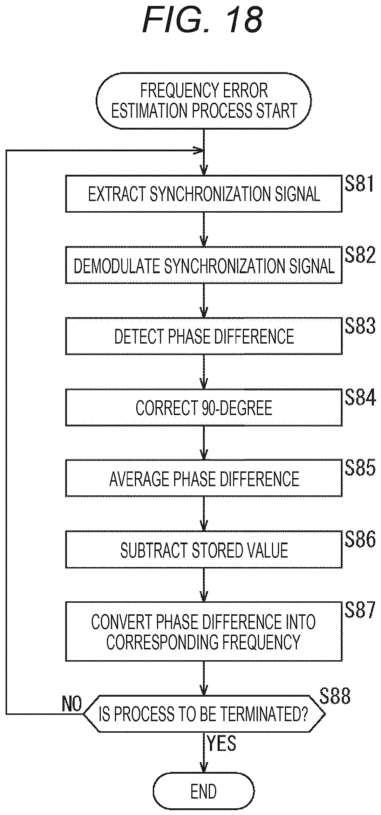

Next, the operation of the frequency estimation unit 212 in Fig. 16 will be described with reference to Fig. 18. Fig. 18 is a flowchart illustrating the frequency error estimation process according to the present technology. The process in Fig. 18 is a process basically similar to the process in Fig. 13. In other words, processing in steps S81 to S85 in Fig. 18 is processing similar to the processing in steps S51 to S55 in Fig. 13, and processing in steps S87 and S88 is processing similar to the processing in steps S56 and S57.

The process in Fig. 18 is different from the process in Fig. 13 in that processing of step S86 is inserted between steps S85 and S87.

In other words, the processing of steps S81 to S85 in Fig. 18 similar to steps S51 to S55 in Fig. 13 is executed by the synchronization extraction unit 301 to the symbol averaging unit 305 in Fig. 16.

In step S83, the phase difference detection unit 303 detects the phase difference of a case where the distance K between the symbols is minimized to one. Therefore, as is apparent from the formula (3) mentioned above, the width of the frequency error $\Delta f$ can be increased compared with a case where a value of the distance K is set to two or more. The phase difference between the detected symbols is expressed by the following formula. Note that $\theta$ is the deviation angle corresponding to the frequency error, and $X_i$ is the intersymbol interference component.

$$90 \text{ degrees} + \theta + X_i \text{ or } -(90 \text{ degrees} + \theta + X_i) \quad (5)$$

Therefore, the average value calculated by the symbol averaging unit 305 in step S85, which is the average value of the value obtained by correcting the component of 90 degrees with the 90-degree correction unit 304 in step S84, is expressed by the following expression. Note that $Av(X_i)$ is an average value of the intersymbol interference component.

$$\theta + Av(X_i) \quad (6)$$

As described above, the average value of the intersymbol interference component is stored in the subtractor 321 in advance, and in step S86, the subtractor 321 subtracts this stored value from the average value of the phase difference. That is, the average value $Av(X_i)$ of the intersymbol interference component is subtracted from the expression (6), whereby only the deviation angle $\theta$ is converted into the frequency error $\Delta f$ by the conversion unit 306 in step S87.

The other descriptions are similar to the case in Fig. 13, and will be omitted.

(6) Influence Exerted by the Number of Taps (Fig. 19)

Here, influence exerted by the number of taps of the matched filter 203 on the performance will be described with reference to Fig. 19. Fig. 19 is a chart illustrating the influence exerted by a tap. In Fig. 19, the horizontal axis represents the number of taps of the matched filter 203, and the vertical axis represents a signal power to interference power ratio (SN). A curve $L_1$ represents the characteristic of the current BS/110-degree CS digital broadcasting standard (ISDB-S) with a roll-off rate of 0.35 and a transmission rate of 52 Mbps. A curve $L_2$ represents the characteristic of the ISDB-S3 with a roll-off rate of 0.03 and a maximum bit rate of 142 Mbps, which efficiently transmits higher quality images, voice, and data.

In the curve $L_1$, if the number of taps is 10, the SN value is about 46, and if the number of taps is 60, the SN value is about 77. In the curve $L_2$, if the number of taps is 10, the SN value is about 23, and if the number of taps is 60, the SN value is about 47. The SN value (about 47) achieved in the case where the number of taps is set to 60 in the curve $L_2$ (ISDB-S3) is approximately equal to the SN value (about 46) achieved in the case where the number of taps is set to 10 in the curve $L_1$ (ISDB-S).

In both of the curves $L_1$ and $L_2$, it is understood that the SN decreases as the number of taps decreases. Furthermore, it is understood that the SN in the curve $L_2$ is worse overall than in the curve $L_1$. In other words, it is understood that the ISDB-S3 requires to minimize deterioration of the SN compared with the ISDB-S (better to increase the number of taps). In the present embodiment, although the number of taps is reduced, the intersymbol interference component is suppressed, whereby the SN similar to that in the case where the number of taps is large can be achieved from the viewpoint of performance.

According to the present embodiment having the configuration as described above, the following effects can be exerted.

(1) The influence exerted by the intersymbol interference can be suppressed.
(2) Since the coarse adjustment is performed on the frequency and the fine adjustment is performed on the phase, quick synchronization can be performed even in a case where a relatively large frequency error (e.g., about 1 MHz) is included.
(3) Proper demodulation processing can be performed.
(4) The configuration is simple so that the circuit scale can be made small and the cost can be reduced.
(5) Since the number of taps is small, a loop delay of a synchronous loop is shortened, and synchronization performance is improved.

<3. Second Satellite Demodulation Unit (Case where IQ inversion is detected: Figs. 20 to 32)>

(1) Configuration and Operation of Second Satellite Demodulation Unit (Figs. 20 and 21)

As illustrated in Fig. 2, the I signal and the Q signal are supplied from the tuner 21 to the demodulating apparatus 22 as separate codes. An I signal output terminal of the tuner 21 may be erroneously or intentionally connected to a Q signal input terminal of the demodulating apparatus 22 at times, and a Q signal output terminal of the tuner 21 may be connected to an I signal input terminal of the demodulating apparatus 22 at times. A case where intentionally done is, for example, the case where a preferable characteristic can be obtained by employing such a connection in which a difference in length between the two connection codes is made small.

Accordingly, it is desirable to enable correct processing even in a case where the codes of the I signal and the Q signal are connected reversely. A configuration of the satellite demodulation unit 71 in such a case will be described with reference to Fig. 20.

Fig. 20 is a block diagram illustrating the configuration of the satellite demodulation unit according to the present technology. In the satellite demodulation unit 71 in Fig. 20, a switching unit 401 is inserted between the multiplier 201 and the timing synchronization unit 202. The other configurations are similar to those of the satellite demodulation unit 71 in Fig. 5.

The switching unit 401 performs switching such that the I signal output from the multiplier 201 is switched to either the I signal input terminal or the Q signal input terminal of the timing synchronization unit 202 to be input. Likewise, the switching unit 401 performs switching such that the Q signal output from the multiplier 201 is switched to either the Q signal input terminal or the I signal input terminal of the timing synchronization unit 202 to be input. The switching is performed on the basis of a switching signal from the frequency estimation unit 212.

Next, operation of the satellite demodulation unit 71 in Fig. 20 will be described with reference to Fig. 21. Fig. 21 is a flowchart illustrating the synchronization process. The process in Fig. 21 is basically similar to the process in Fig. 7. In other words, processing in step S101 in Fig. 21 is processing similar to the processing in step S11 in Fig. 7, and processing in steps S103 to S110 in Fig. 21 is processing similar to the processing in steps S12 to S19 in Fig. 7. The process in Fig. 21 is different from the process in Fig. 7 in that processing of step S102 is inserted between steps S101 and S103.

If the signal detected in the processing in step S101 is input to the switching unit 401, in step S102, the switching unit 401 performs switching in accordance with the switching signal. The switching signal is supplied from the frequency estimation unit 212.

In a case where the switching signal indicates that the I signal and the Q signal are inverted, the switching unit 401 switches a supply destination of the I signal and the Q signal. In other words, the I signal output from the multiplier 201 is supplied to the Q signal input terminal of the timing synchronization unit 202, and the Q signal is supplied to the I signal input terminal of the timing synchronization unit 202. In a case where the switching signal indicates that the I signal and the Q signal are not inverted, the switching unit 401 does not switch the supply destination of the I signal and the Q signal. In other words, the I signal and the Q signal are supplied to the I signal input terminal of the timing synchronization unit 202 and the Q signal input terminal of the timing synchronization unit 202, respectively.

In this manner, regardless of whether the I signal and the Q signal are inverted or not, the I signal and the Q signal are correctly input to each unit subsequent to the timing synchronization unit 202, whereby each processing can be correctly performed.

Other processing is similar to the processing illustrated in Fig. 7, and descriptions thereof will be omitted.

Note that, although the switching unit 401 is disposed before the timing synchronization unit 202 in the exemplary case in Fig. 20, it is only required to be disposed before the phase synchronization unit 205, and may be disposed, for example, before the multiplier 201, before the equalizer 204, and the like.

(2) Fourth Frequency Estimation Unit (Case where IQ inversion is detected, and distance K is two or more and odd number: Figs. 22 to 24)

Next, an exemplary configuration of the frequency estimation unit 212 in Fig. 20 will be described. Fig. 22 is a block diagram illustrating the configuration of the frequency estimation unit according to the present technology. In the frequency estimation unit 212 in Fig. 22, an IQ inversion detection unit 421 is provided. The other configurations are similar to those of the frequency estimation unit 212 in Fig. 12. However, the frequency estimation unit 212 in Fig. 22, the phase difference detection unit 303 performs phase difference detection in the case where the distance K between the symbols is two or more and is an odd number.

The IQ inversion detection unit 421 detects the IQ conversion from the output of the phase difference detection unit 303, and outputs a switching signal corresponding to the detection result to the switching unit 401 in Fig. 20.

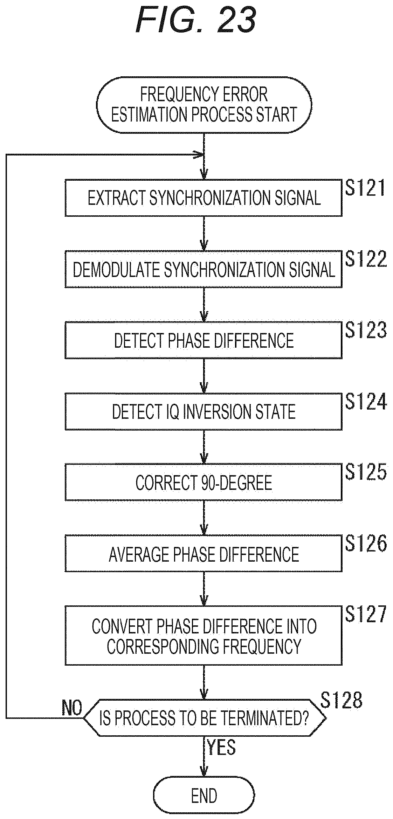

Next, the operation of the frequency estimation unit 212 in Fig. 22 will be described with reference to Fig. 23. Fig. 23 is a flowchart illustrating the frequency error estimation process according to the present technology. The process in Fig. 23 is basically similar to the process in Fig. 13. Processing in steps S121 to S123 in Fig. 23 is similar to the processing in steps S51 to S53 in Fig. 13, and processing in steps S125 to S128 in Fig. 23 is similar to the processing in steps S54 to S57 in Fig. 13. In Fig. 23, the process in Fig. 23 is different from the process in Fig. 13 in that processing of step S124 is inserted between steps S123 and S125.

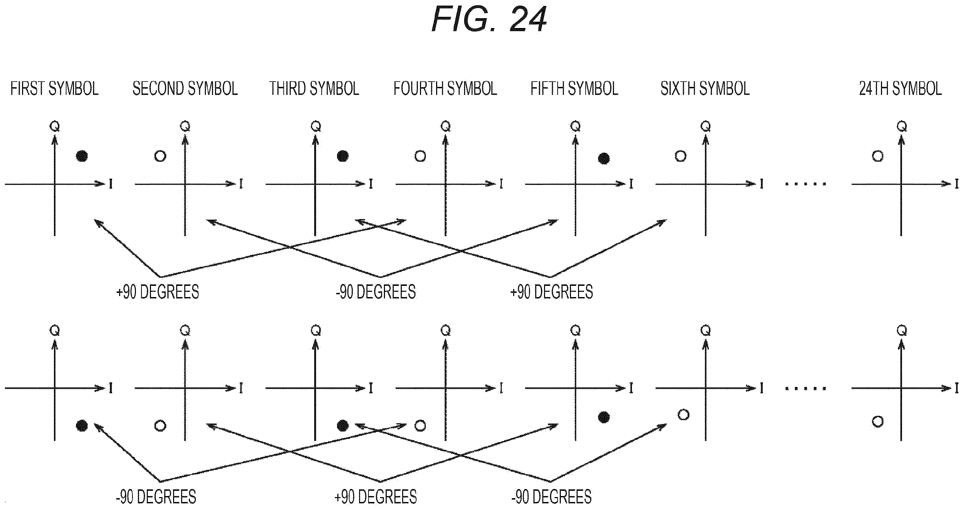

In steps S121 to S123 and steps S125 to S128, processing similar to that in the case described with reference to Fig. 13 is performed by the synchronization signal extracting unit 301 to the conversion unit 306. However, in step S123, the phase difference detection unit 303 performs phase difference detection processing in the case where the distance K between the symbols is two or more and is an odd number (distance K = 3 in the case of Fig. 24) as illustrated in Fig. 3, for example.

Here, with reference to Fig. 24, the inversion of the I signal and the Q signal in the case where the distance K between the symbols is an odd number will be described. Fig. 24 is a diagram illustrating the inversion of the I signal and the Q signal. Fig. 24 illustrates an exemplary case where the distance K between the symbols is three. The upper part in Fig. 24 illustrates the signal in the case where the I signal and the Q signal are not inverted, and the lower part illustrates the signal in the case of being inverted. In the case of being inverted, the symbol of the imaginary part (coordinate of Q axis) is opposite in polarity to the case of not being inverted. That is, a complex conjugate relationship is established.

Therefore, while the phase difference between the first symbol and the fourth symbol is +90 degrees in the upper part in which the I signal and the Q signal are not inverted, the phase difference between the first symbol and the fourth symbol is -90 degrees in the lower part in which the I signal and the Q signal are inverted. While the phase difference between the second symbol and the fifth symbol is -90 degrees in the upper part, it is +90 degrees in the lower part. While the phase difference between the third symbol and the sixth symbol is +90 degrees in the upper part, it is -90 degrees in the lower part.

In this manner, in the case where the I signal and the Q signal are inverted, the symbol of 90 degrees is reversed as compared with the case of not being inverted. In step S124, the IQ inversion detection unit 421 detects the inversion of this symbol. That is, the IQ inversion detection unit 421 stores the symbol of the 90-degree component of the phase difference between the respective symbols in the case where the I signal and the Q signal are not inverted, and in a case where the detected symbol is in a reversed state with respect to the stored symbol, it is determined that the I signal and the Q signal are inverted. On the other hand, in a case where the detected symbol is not in a reversed state with respect to the stored symbol, it is determined that the I signal and the Q signal are not inverted. A result of the determination is supplied to the switching unit 401 in Fig. 20 as a switching signal.

The other operations are similar to those in the case in Fig. 12 (Fig. 13), and descriptions thereof will be omitted.

In this manner, in the case where the phase difference detection unit 303 detects the phase difference between the symbols in which the distance K is two or more and is an odd number, as is apparent from the exemplary case in Fig. 25 to be described later, a dedicated phase difference detection unit 451 for the IQ conversion detection is not necessarily provided. Therefore, the configuration is simplified and the cost can be reduced.

(3) Fifth Frequency Estimation Unit (Case where IQ inversion is detected, symbol with minimum ISI average is selected, and distance K is odd number: Figs. 15, 22, and 23)

As described with reference to Fig. 15, in the phase difference detection unit 303 in Fig. 22, the phase difference between the symbols in which the average value of the component based on the intersymbol interference is minimized can be also detected. The processing thereof is similar to that in the case described with reference to Fig. 23. However, the phase difference between the symbols in this case needs to be the phase difference between the symbols in which the distance K at which the IQ inversion can be detected is an odd number.

(4) Sixth Frequency Estimation Unit (Case where IQ inversion is detected, and distance K is two or more and even number: Figs. 25 to 28)

Next, another exemplary configuration of the frequency estimation unit 212 in Fig. 20 will be described. Fig. 25 is a block diagram illustrating the configuration of the frequency estimation unit according to the present technology. In the frequency estimation unit 212 in Fig. 25, the phase difference detection unit 451 is provided in the preceding stage of the IQ inversion detection unit 421. The other configurations are similar to those of the frequency estimation unit 212 in Fig. 22. However, the frequency estimation unit 212 in Fig. 25, the phase difference detection unit 303 performs phase difference detection in the case where the distance K between the symbols is an even number of two or more. On the other hand, the phase difference detection unit 451 performs the phase difference detection in the case where the distance K between the symbols is an odd number. The other configurations are similar to those in the case in Fig. 22.

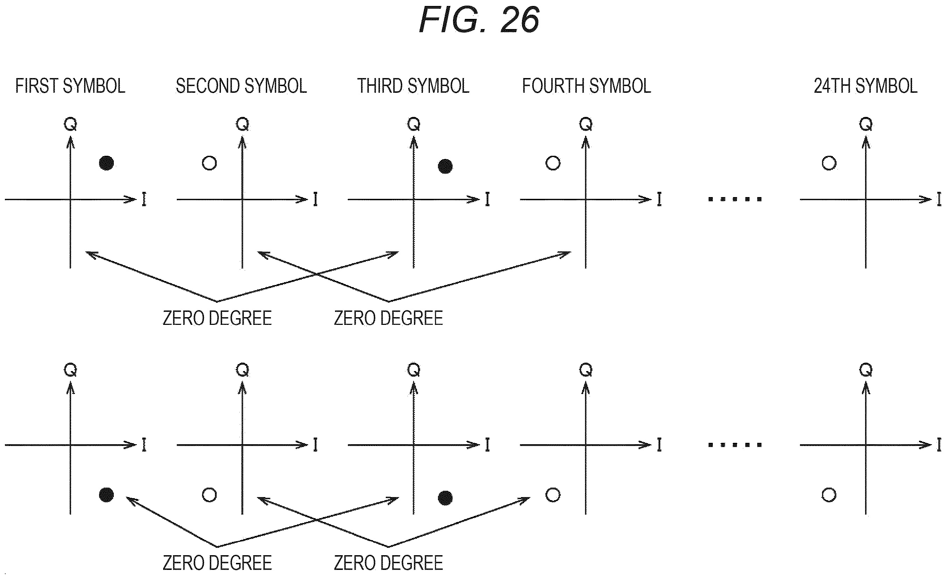

Here, with reference to Fig. 26, the inversion of the I signal and the Q signal in the case where the distance K between the symbols is an even number will be described. Fig. 26 is a diagram illustrating the inversion of the I signal and the Q signal. Fig. 26 illustrates an exemplary case where the distance K between the symbols is two. The upper part in Fig. 26 illustrates the signal in the case where the I signal and the Q signal are not inverted, and the lower part illustrates the signal in the case of being inverted. In the case of being inverted, the symbol of the imaginary part (coordinate of Q axis) is opposite in polarity to the case of not being inverted. That is, a complex conjugate relationship is established.

Therefore, the phase difference between the first symbol and the third symbol is zero degree in the upper part in which the I signal and the Q signal are not inverted, and the phase difference between the first symbol and the third symbol is also zero degree in the lower part in which the I signal and the Q signal are inverted. The phase difference between the second symbol and the fourth symbol is zero degree in the upper part, and is also zero degree in the lower part.

In this manner, in the phase difference detection unit 303 in a signal processing path for original frequency error detection, since the phase difference in the case where the distance K between the symbols is two (even number) is detected, IQ inversion cannot be detected. Accordingly, in the frequency estimation unit 212 in Fig. 25, in addition to the phase difference detection unit 303 for frequency error detection, the phase difference detection unit 451 for IQ inversion detection is provided in the preceding stage of the IQ inversion detection unit 421. Therefore, from the output of the synchronization signal demodulation unit 303, phase difference detection in the case where the distance K between the symbols is an odd number (e.g., case where the distance K between the symbols is three as illustrated in Fig. 24) is performed.

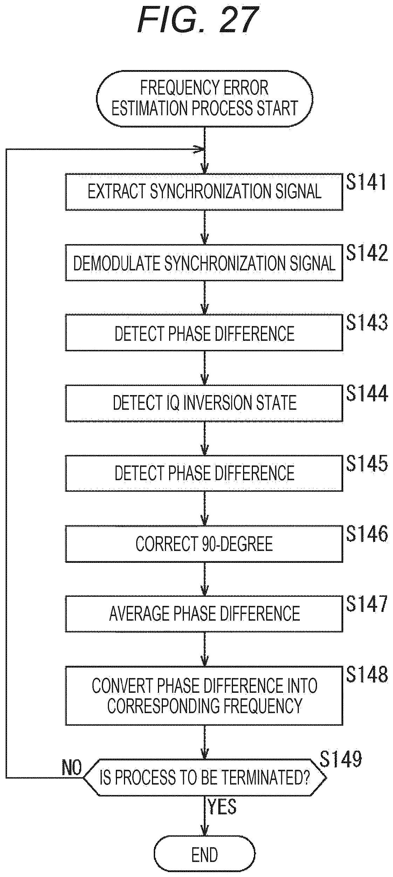

Next, the operation of the frequency estimation unit 212 in Fig. 25 will be described with reference to Fig. 27. Fig. 27 is a flowchart illustrating the frequency error estimation process according to the present technology. The process in Fig. 27 is a process basically similar to the process in Fig. 23 (i.e., process in Fig. 13). In other words, processing in steps S141 and S142 is processing similar to the processing in steps S121 and S122 in Fig. 23 (processing in steps S51 and S52 in Fig. 13), and processing in steps S145 to S149 is processing similar to the processing in step S123 and steps S125 to S128 in Fig. 23 (processing in steps S53 to S57 in Fig. 13). Furthermore, processing in step S144 in Fig. 27 is processing similar to the processing in step S124 in Fig. 23. As a result, it is different from the case in Fig. 23 in that a dedicated phase difference detection is performed in step S143 to perform the IQ inversion detection processing in step S144.

In steps S141, S142, and S145 to S149 in Fig. 27, the synchronization signal extracting unit 301 to the conversion unit 306 perform processing similar to that in the case in Fig. 23 (i.e., processing similar to that in the case in Fig. 13). However, in step S145, the phase difference detection unit 303 performs the phase difference detection processing in the case where the distance K between the symbols is an even number of two or more (e.g., case where K = 2 is set as illustrated in Fig. 14).

In step S143, the phase difference detection unit 451 detects the phase difference of the synchronization signal demodulated by the synchronization signal demodulation unit 302 in step S142. Here, the phase difference detection processing in the case where the distance K between the symbols is an odd number (e.g., case where K = 3 is set as illustrated in Fig. 24) is performed. In step S144, the IQ inversion detection unit 421 detects the inversion state of the I signal and the Q signal from the phase difference detected by the phase difference detection unit 451 as described with reference to Fig. 24, and outputs the determination result to the switching unit 421 in Fig. 20 as a switching signal.

Other processing is similar to the processing illustrated in Fig. 23 (Fig. 13), and descriptions thereof will be omitted.

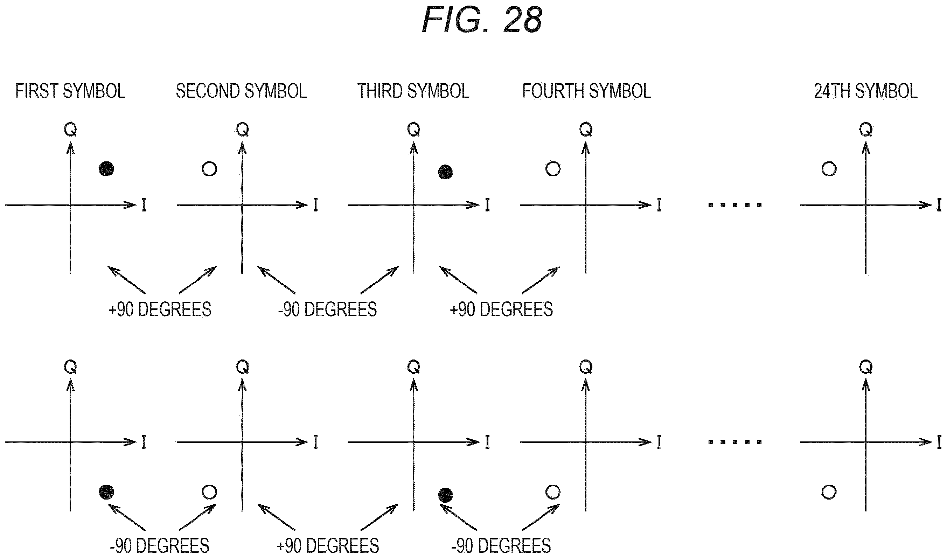

Note that the phase difference detection unit 451 in Fig. 25 is dedicated to IQ inversion detection, and is not used for frequency error estimation, whereby it is acceptable if a slight influence of the intersymbol interference is exerted. Accordingly, as illustrated in Fig. 28, the phase difference in the case where the distance K between the symbols is one may be detected.

That is, Fig. 28 is a diagram illustrating the inversion of the I signal and the Q signal. Fig. 28 illustrates an exemplary case where the distance K between the symbols is one. The upper part in Fig. 28 illustrates the signal in the case where the I signal and the Q signal are not inverted, and the lower part illustrates the signal in the case of being inverted. In the case of being inverted, the symbol of the imaginary part (coordinate of Q axis) is opposite in polarity to the case of not being inverted. That is, a complex conjugate relationship is established.

Therefore, while the phase difference between the first symbol and the second symbol is +90 degrees in the upper part in which the I signal and the Q signal are not inverted, the phase difference between the first symbol and the second symbol is -90 degrees in the lower part in which the I signal and the Q signal are inverted. While the phase difference between the second symbol and the third symbol is -90 degrees in the upper part, it is +90 degrees in the lower part. While the phase difference between the third symbol and the fourth symbol is +90 degrees in the upper part, it is -90 degrees in the lower part.

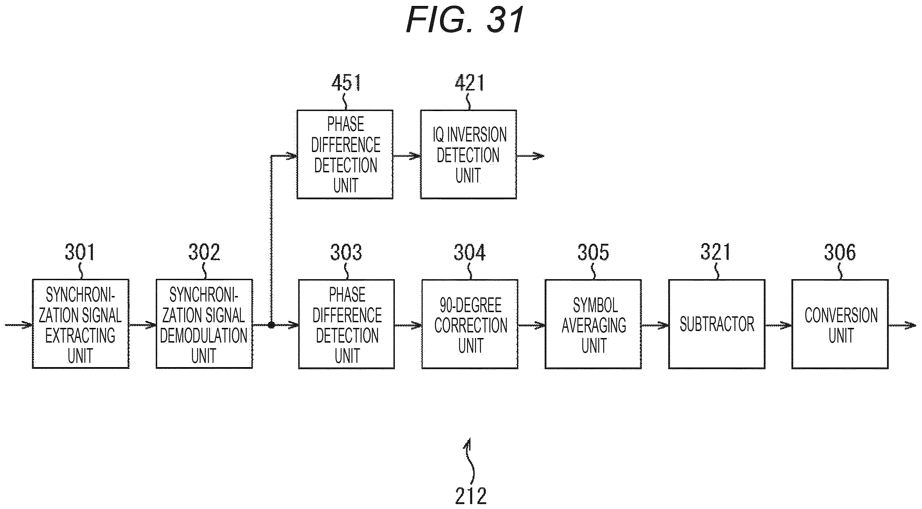

In this manner, in the phase difference detection unit 451, the phase difference in the case where the distance K between the symbols is one may be detected. This also similarly applies to the exemplary case in Fig. 31 to be described later.

(5) Seventh Frequency Estimation Unit (Case where IQ inversion is detected, symbol with minimum ISI average is selected, and distance K is even number: Figs. 15, 25, and 27)

The phase difference between the symbols in which the distance K is an even number is detected in the phase difference detection unit 303 in Fig. 25, and the phase difference between the symbols in which the distance K is an odd number is detected in the phase difference detection unit 451. As described with reference to Fig. 15, in the phase difference detection unit 303, the phase difference between the symbols in which the average value of the component based on the intersymbol interference is minimized is detected, and in the phase difference between the symbols, the configuration of the frequency estimation unit 212 is as illustrated in Fig. 25 even in a case where the IQ inversion cannot be detected. The processing thereof is similar to that in the case described with reference to Fig. 27. However, the phase difference detection unit 451 in this case needs to detect the phase difference between the symbols in which the IQ inversion can be detected.

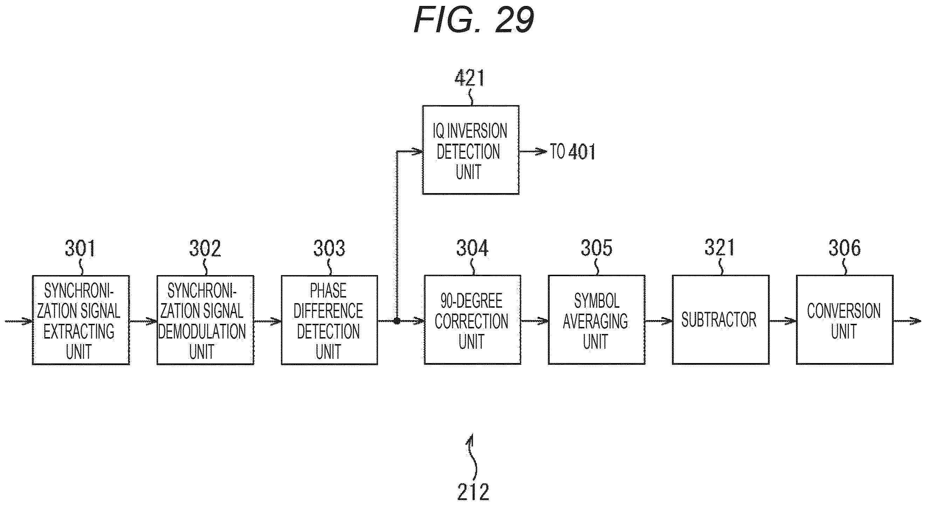

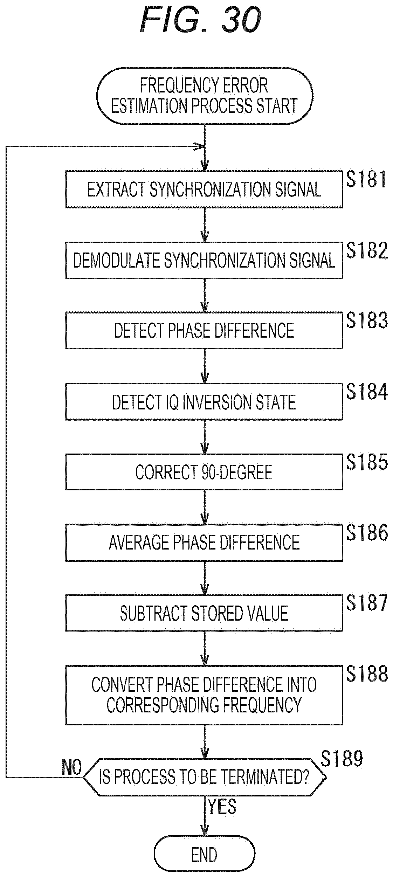

(6) Eighth Frequency Estimation Unit (Case where IQ inversion is detected, ISI subtraction is performed, and distance K is odd number: Figs. 29 and 30)

Next, still another exemplary configuration of the frequency estimation unit 212 in Fig. 20 will be described. Fig. 29 is a block diagram illustrating the configuration of the frequency estimation unit according to the present technology. The frequency estimation unit 212 in Fig. 29 has a configuration basically similar to that of the frequency estimation unit 212 in Fig. 16. The frequency estimation unit 212 in Fig. 29 is different from the frequency estimation unit 212 in Fig. 16 in that the IQ inversion detection unit 421 is provided. However, the phase difference detection unit 303 of the frequency estimation unit 212 in Fig. 29 performs the phase difference detection processing in the case where the distance K between the symbols is an odd number (e.g., case where K = 3 is set as illustrated in Fig. 24).
Next, the operation of the frequency estimation unit 212 in Fig. 29 will be described with reference to Fig. 30. Fig. 30 is a flowchart illustrating the frequency error estimation process according to the present technology. Processing in steps S181 to S183 and steps S185 to S189 in Fig. 30 is processing similar to the processing in steps S81 to S88 in Fig. 18. The process in Fig. 30 is different from the process in Fig. 18 in that processing of step S184 is inserted between steps S183 and S185.
In steps S181 to S183, S185, S186, S188, and S189, processing similar to the processing in steps S81 to S85, S87, and S88 in Fig. 18, in other words, the processing in steps S51 to S57 in Fig. 13, is executed. In step S187, processing of subtracting the stored value similar to the processing in step S86 in Fig. 18 is performed.
Further, in the frequency error estimation process in Fig. 30, in step S184, the IQ inversion detection unit 421 detects the inversion state of the I signal and the Q signal from the phase difference detected by the phase difference detection unit 303 in step S183. The detection result is output to the switching unit 401 in Fig. 20 as a switching signal.
Other processing is similar to the case described with reference to Fig. 18, and descriptions thereof will be omitted.
Note that, in a case where a slight influence exerted by the intersymbol interference is acceptable in the phase difference between the symbols for IQ inversion detection, in the phase difference detection unit 303 in Fig. 29, the phase difference between the symbols in which the distance K is one may be detected as illustrated in Fig. 28. This is because the subtractor 321 subtracts the intersymbol interference component with respect to the signal used for the frequency error estimation.

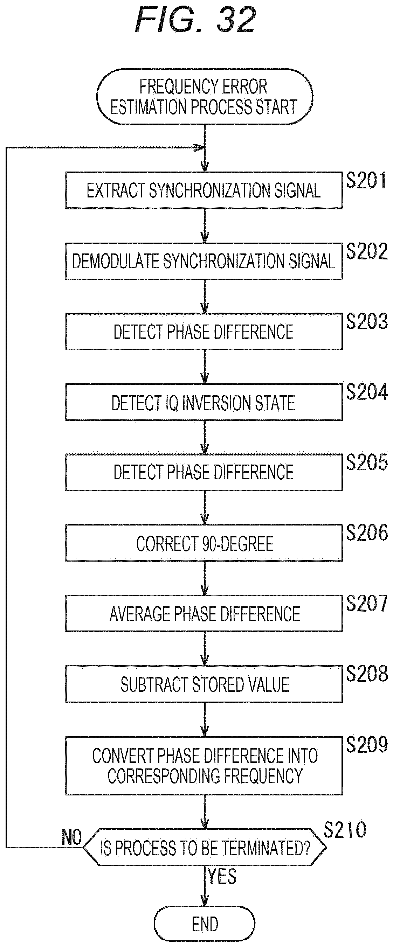

(7) Ninth Frequency Estimation Unit (Case where IQ inversion is detected, ISI subtraction is performed, and distance K is even number: Figs. 31 and 32)

Next, still another exemplary configuration of the frequency estimation unit 212 in Fig. 20 will be described. Fig. 31 is a block diagram illustrating the configuration of the frequency estimation unit according to the present technology. The frequency estimation unit 212 in Fig. 31 has a configuration basically similar to that of the frequency estimation unit 212 in Fig. 16. The frequency estimation unit 212 in Fig. 31 is different from the frequency estimation unit 212 in Fig. 16 in that the IQ inversion detection unit 421 is provided and the phase difference detection unit 451 is provided in the preceding stage. However, the phase difference detection unit 303 of the frequency estimation unit 212 in Fig. 31 performs the phase difference detection processing in the case where the distance K between the symbols is an even number (e.g., case where K = 2 is set as illustrated in Fig. 14). Meanwhile, the phase difference detection unit 451 performs the phase difference detection in the case where the distance K between the symbols is an odd number (e.g., case where K = 1 is set as illustrated in Fig. 24). The other configurations are similar to those in the case in Fig. 16.

The frequency estimation unit 212 in Fig. 31 is different from that in Fig. 29 in that the dedicated phase difference detection unit 451 is provided for the IQ inversion detection unit 421 to detect the inversion of the I signal and the Q signal.

Next, the operation of the frequency estimation unit 212 in Fig. 31 will be described with reference to Fig. 32. Fig. 32 is a flowchart illustrating the frequency error estimation process according to the present technology. Processing in steps S201, S202, and S205 to S210 in Fig. 32 is processing similar to the processing in steps S81 to S88 in Fig. 18. The process is different from the process in Fig. 18 in that processing of steps S203 and S204 is inserted between steps S202 and S205.

Furthermore, processing in steps S201, S202, and steps S205 to S210 in Fig. 32 corresponds to the processing in steps S181 to S183 and S185 to S189 in Fig. 30. In Fig. 30, the phase difference detection result in step S183 is used to detect the IQ inversion state in step S184. Meanwhile, in Fig. 32, a dedicated phase difference detection result for detecting the IQ inversion state in step S203 is used to detect the IQ inversion state in step S204.

In steps S201, S202, S205 to S207, S208, and S210, processing similar to the processing in steps S81 to S85, S87, and S88 in Fig. 18, in other words, the processing in steps S51 to S57 in Fig. 13, is executed. However, in step S205, the phase difference detection unit 303 performs the phase difference detection processing in the case where the distance K between the symbols is an even number (e.g., case where K = 2 is set as illustrated in Fig. 14). In step S208, processing of subtracting the stored value similar to the processing in step S86 in Fig. 18 is performed.

Furthermore, in step S203, the phase difference detection unit 451 performs the phase difference detection processing in the case where the distance K between the symbols is an odd number (e.g., case where K = 3 is set as illustrated in Fig. 24). In step S204, the IQ inversion detection unit 421 detects the inversion state of the I signal and the Q signal on the basis of the phase difference detected processing of subtracting the stored value similar to the processing in step S86 in Fig. 18 is performed.

Furthermore, in step S203, the phase difference detection unit 451 performs the phase difference detection processing in the case where the distance K between the symbols is an odd number (e.g., case where K = 3 is set as illustrated in Fig. 24). In step S204, the IQ inversion detection unit 421 detects the inversion state of the I signal and the Q signal on the basis of the phase difference detected by the phase difference detection unit 451. The detection result is output to the switching unit 401 in Fig. 20 as a switching signal.

Other processing is similar to the case described with reference to Fig. 18, and descriptions thereof will be omitted.

According to the present embodiment having the configuration as described above, in addition to the effects described in the first satellite demodulation unit, the following effects can be exerted.

(1) A signal can be properly demodulated even in a case where the I signal and the Q signal are inverted.
(2) A configuration can be further simplified by detecting the phase difference between the symbols in which the distance K is an odd number.

Furthermore, embodiments according to the present technology are not limited to the embodiments described above, and various modifications are possible without departing from the present technology. The present technology can also be applied to the case where the roll-off rate is 0.05 or the like.

REFERENCE SIGNS LIST

| | |
|---|---|
| 11 | Receiving apparatus |
| 22 | Demodulating apparatus |
| 42 | Demodulation block |
| 71 | Satellite demodulation unit |
| 201 | Multiplier |
| 202 | Timing synchronization unit |
| 203 | Matched filter |
| 204 | Equalizer |
| 205 | Phase synchronization unit |
| 206 | Frequency synchronization unit |
| 211 | Frame synchronization unit |
| 212 | Frequency estimation unit |
| 213 | NCO |
| 301 | Synchronization extraction unit |
| 302 | Synchronization signal demodulation unit |

303     Phase detection unit
304     90-degree correction unit
305     Symbol averaging unit
306     Conversion unit
321     Subtractor
401     Switching unit
421     IQ inversion detection unit
451     Phase difference detection unit

**Claims**

1.  A receiving apparatus, comprising:

    an estimation unit (212) configured to estimate an estimation value of a frequency error of a symbol included in a synchronization signal of a reception signal; and
    a control unit (76) configured to control a component based on intersymbol interference of the estimation value, wherein
    the estimation value is estimated from a phase difference between two symbols included in the synchronization signal which are two symbols away from each other, wherein
    the component of the intersymbol interference of the estimation value is controlled by subtracting a value corresponding to a component of a previous intersymbol interference stored in advance.

2.  The receiving apparatus according to claim 1, wherein
    a distance between the two symbols is two or more.

3.  The receiving apparatus according to claim 1, wherein
    a distance between the two symbols for estimating the estimation value is an odd number of three or more.

4.  The receiving apparatus according to claim 1, further comprising:

    a detection unit (421) configured to detect an inversion state of an I signal and an Q signal to be received, wherein
    the estimation value is estimated from the two symbols in which a distance between the symbols is an even number, and
    the inversion state of the I signal and the Q signal is detected from the two symbols in which the distance between the symbols is an odd number.

5.  The receiving apparatus according to claim 1, further comprising:

    a detection unit (421) that detects an inversion state of an I signal and an Q signal to be received,
    a switching unit (401) configured to switch the I signal and the Q signal to be processed in a case where an inversion of the I signal and the Q signal to be received is detected.

6.  The receiving apparatus according to claim 1, wherein
    a number of taps of a matched filter (203) is chosen which has a minimum signal to noise ratio such that the component of the intersymbol interference is suppressed.

7.  The receiving apparatus according to claim 6, wherein
    the phase difference between the two symbols is averaged such that the component of the intersymbol interference is minimized.

8.  The receiving apparatus according to claim 1, wherein
    the reception signal is detected on the basis of a carrier wave signal of the reception signal which is multiplied by an oscillating signal adjusted to have a predetermined frequency,
    a frequency band of the reception signal is limited, and
    a phase of the signal in which the frequency is limited is synchronized.

9.  The receiving apparatus according to claim 1, wherein

the receiving apparatus is further configured to receive advanced broadband satellite broadcasting.

**10.** A method of reception, comprising:

estimating an estimation value of a frequency error of a symbol included in a synchronization signal of a reception signal; and
controlling a component based on intersymbol interference of the estimation value wherein
the estimation value is estimated from a phase difference between two symbols which are two symbols away from each other, the method further comprising:

detecting an inversion state of an I signal and an Q signal to be received, wherein
the component of the intersymbol interference of the estimation value is controlled by subtracting a value corresponding to a component of a previous intersymbol interference stored in advance.

**11.** A demodulating apparatus, comprising:

an estimation unit (212) configured to estimate an estimation value of a frequency error of a symbol included in a synchronization signal of a reception signal; and
a control unit (76) configured to control a component based on intersymbol interference of the estimation value, wherein
the estimation value is estimated from a phase difference between two symbols which are two symbols away from each other, wherein
the component of the intersymbol interference of the estimation value is controlled by subtracting a value corresponding to a component of a previous intersymbol interference stored in advance.

**Patentansprüche**

**1.** Empfangsvorrichtung, die Folgendes umfasst:

eine Schätzeinheit (212), die dazu ausgelegt ist, einen Schätzwert eines Frequenzfehlers eines Symbols, das in einem Synchronisationssignal eines Empfangssignals beinhaltet ist, zu schätzen; und
eine Steuereinheit (76), die dazu ausgelegt ist, auf Basis einer Intersymbolinterferenz des Schätzwerts eine Komponente zu steuern, wobei
der Schätzwert anhand einer Phasendifferenz zwischen zwei Symbolen, die im Synchronisationssignal beinhaltet sind und zwei Symbole sind, die voneinander entfernt sind, geschätzt wird, wobei
die Komponente der Intersymbolinterferenz des Schätzwerts durch Subtrahieren eines Wertes, der einer Komponente einer vorherigen Intersymbolinterferenz entspricht, die vorab gespeichert wurde, gesteuert wird.

**2.** Empfangsvorrichtung nach Anspruch 1, wobei ein Abstand zwischen den zwei Symbolen zwei oder mehr ist.

**3.** Empfangsvorrichtung nach Anspruch 1, wobei ein Abstand zwischen den zwei Symbolen zum Schätzen des Schätzwerts eine ungerade Zahl von drei oder mehr ist.

**4.** Empfangsvorrichtung nach Anspruch 1, die ferner Folgendes umfasst:

eine Detektionseinheit (421), die dazu ausgelegt ist, einen Inversionsstatus eines I-Signals und eines Q-Signals, die zu empfangen sind, zu detektieren, wobei
der Schätzwert anhand der zwei Symbole geschätzt wird, wobei ein Abstand zwischen den Symbolen eine gerade Zahl ist, und
der Inversionsstatus des I-Signals und des Q-Signals anhand der zwei Symbole detektiert wird, wobei der Abstand zwischen den Symbolen eine ungerade Zahl ist.

**5.** Empfangsvorrichtung nach Anspruch 1, die ferner Folgendes umfasst:

eine Detektionseinheit (421), die einen Inversionsstatus eines I-Signals und eines Q-Signals, die zu empfangen sind, detektiert,
eine Umschalteinheit (401), die dazu ausgelegt ist, in einem Fall, in dem eine Inversion des I-Signals und des Q-Signals, die zu empfangen sind, detektiert wird, das I-Signal und das Q-Signal, die zu verarbeiten sind, umzuschalten.

6. Empfangsvorrichtung nach Anspruch 1, wobei eine Anzahl von Abgriffen eines angepassten Filters (203) mit einem minimalen Signal-Rauschen-Verhältnis derart gewählt wird, dass die Komponente der Intersymbolinterferenz unterdrückt wird.

7. Empfangsvorrichtung nach Anspruch 6, wobei die Phasendifferenz zwischen den zwei Symbolen derart gemittelt wird, dass die Komponente der Intersymbolinterferenz minimiert wird.

8. Empfangsvorrichtung nach Anspruch 1, wobei
das Empfangssignal auf Basis eines Trägerwellensignals des Empfangssignals, das mit einem Oszillationssignal multipliziert wird, das auf eine vorbestimmte Frequenz eingestellt wird, detektiert wird,
ein Frequenzband des Empfangssignals begrenzt ist und
eine Phase des Signals, in der die Frequenz begrenzt ist, synchronisiert ist.

9. Empfangsvorrichtung nach Anspruch 1, wobei die Empfangsvorrichtung ferner dazu ausgelegt ist, erweiterten Breitbandsatellitenfunk zu empfangen.

10. Empfangsverfahren, das Folgendes umfasst:

Schätzen eines Schätzwerts eines Frequenzfehlers eines Symbols, das in einem Synchronisationssignal eines Empfangssignals beinhaltet ist; und
Steuern einer Komponente auf Basis einer Intersymbolinterferenz des Schätzwerts, wobei
der Schätzwert anhand einer Phasendifferenz zwischen zwei Symbolen, die zwei Symbole sind, die voneinander entfernt sind, geschätzt wird, wobei das Verfahren ferner Folgendes umfasst:

Detektieren eines Inversionsstatus eines I-Signals und eines Q-Signals, die zu empfangen sind, wobei die Komponente der Intersymbolinterferenz des Schätzwerts durch Subtrahieren eines Wertes, der einer Komponente einer vorherigen Intersymbolinterferenz entspricht, die vorab gespeichert wurde, gesteuert wird.

11. Demodulationsvorrichtung, die Folgendes umfasst:

eine Schätzeinheit (212), die dazu ausgelegt ist, einen Schätzwert eines Frequenzfehlers eines Symbols, das in einem Synchronisationssignal eines Empfangssignals beinhaltet ist, zu schätzen; und eine Steuereinheit (76), die dazu ausgelegt ist, auf Basis einer Intersymbolinterferenz des Schätzwerts eine Komponente zu steuern, wobei
der Schätzwert anhand einer Phasendifferenz zwischen zwei Symbolen, die zwei Symbole sind, die voneinander entfernt sind, geschätzt wird, wobei
die Komponente der Intersymbolinterferenz des Schätzwerts durch Subtrahieren eines Wertes, der einer Komponente einer vorherigen Intersymbolinterferenz entspricht, die vorab gespeichert wurde, gesteuert wird.

## Revendications

1. Appareil de réception, comprenant :

une unité d'estimation (212) configurée pour estimer une valeur d'estimation d'une erreur de fréquence d'un symbole inclus dans un signal de synchronisation d'un signal de réception ; et
une unité de commande (76) configurée pour commander une composante basée sur l'interférence inter-symbole de la valeur d'estimation, où :
la valeur d'estimation est estimée à partir d'une différence de phase entre deux symboles inclus dans le signal de synchronisation qui sont distants de deux symboles l'un de l'autre, où :
la composante de l'interférence inter-symbole de la valeur d'estimation est commandée en soustrayant une valeur correspondant à une composante d'une interférence inter-symbole précédente stockée à l'avance.

2. Appareil de réception selon la revendication 1, dans lequel :

une distance entre les deux symboles est de deux ou plus.

3. Appareil de réception selon la revendication 1, dans lequel :
une distance entre les deux symboles pour estimer la valeur d'estimation est un nombre impair de trois ou plus.

4. Appareil de réception selon la revendication 1, comprenant en outre :
une unité de détection (421) configurée pour détecter un état d'inversion d'un signal I et d'un signal Q à recevoir, où :

la valeur d'estimation est estimée à partir des deux symboles dans lesquels une distance entre les symboles est un nombre pair, et
l'état d'inversion du signal I et du signal Q est détecté à partir des deux symboles dans lesquels la distance entre les symboles est un nombre impair.

5. Appareil de réception selon la revendication 1, comprenant en outre :

une unité de détection (421) qui détecte un état d'inversion d'un signal I et d'un signal Q à recevoir,
une unité de commutation (401) configurée pour commuter le signal I et le signal Q à traiter dans un cas où une inversion du signal I et du signal Q à recevoir est détectée.

6. Appareil de réception selon la revendication 1, dans lequel :
un nombre de prises d'un filtre adapté (203) est choisi, lequel filtre a un rapport signal/bruit minimum tel que la composante de l'interférence inter-symbole est supprimée.

7. Appareil de réception selon la revendication 6, dans lequel :
la différence de phase entre les deux symboles est moyennée de manière à ce que la composante de l'interférence inter-symbole soit minimisée.

8. Appareil de réception selon la revendication 1, dans lequel :

le signal de réception est détecté sur la base d'un signal d'onde porteuse du signal de réception qui est multiplié par un signal oscillant ajusté pour avoir une fréquence prédéterminée,
une bande de fréquence du signal de réception est limitée, et
une phase du signal dans lequel la fréquence est limitée est synchronisée.

9. Appareil de réception selon la revendication 1, dans lequel :
l'appareil de réception est en outre configuré pour recevoir une diffusion par satellite à large bande avancée.

10. Procédé de réception, comprenant les étapes suivantes :

estimer une valeur d'estimation d'une erreur de fréquence d'un symbole inclus dans un signal de synchronisation d'un signal de réception ; et
commander une composante basée sur l'interférence inter-symbole de la valeur d'estimation, où :
la valeur d'estimation est estimée à partir d'une différence de phase entre deux symboles qui sont distants de deux symboles l'un de l'autre, le procédé comprenant en outre les étapes suivantes :
détecter un état d'inversion d'un signal I et d'un signal Q à recevoir, où :
la composante de l'interférence inter-symbole de la valeur d'estimation est commandée en soustrayant une valeur correspondant à une composante d'une interférence inter-symbole précédente stockée à l'avance.

11. Appareil de démodulation, comprenant :

une unité d'estimation (212) configurée pour estimer une valeur d'estimation d'une erreur de fréquence d'un symbole inclus dans un signal de synchronisation d'un signal de réception ; et
une unité de commande (76) configurée pour commander une composante basée sur l'interférence inter-symbole de la valeur d'estimation, où :
la valeur d'estimation est estimée à partir d'une différence de phase entre deux symboles qui sont distants de deux symboles l'un de l'autre, où :
la composante de l'interférence inter-symbole de la valeur d'estimation est commandée en soustrayant une valeur correspondant à une composante d'une interférence inter-symbole précédente stockée à l'avance.

# FIG. 1

EP 3 493 498 B1

## FIG. 2

# FIG. 3

33.7561MSps

··· | Frame#1 | Frame#2 | Frame#3 | Frame#4 | Frame#5 | Frame#6 | Frame#7 | Frame#8 | ···

9296symbol＝0.285ms（Data＋TMCC＝8976symbol＋264symbol）

| | 24 | 32 | 136 | 4 | 136 | 4 | | 136 | 4 | 136 | 4 |
|---|---|---|---|---|---|---|---|---|---|---|---|
| MODULATION SLOT #1 | FSync | P | Data #1 | T | Data #2 | T | ··· | Data #65 | T | Data #66 | T |
| MODULATION SLOT #2 | SSync | P | Data #67 | T | Data #68 | T | ··· | Data #131 | T | Data #132 | T |
| MODULATION SLOT #3 | !FSync | P | Data #133 | T | Data #134 | T | ··· | Data #197 | T | Data #198 | T |
| MODULATION SLOT #4 | SSync | P | Data #199 | T | Data #200 | T | ··· | Data #263 | T | Data #264 | T |
| ⋮ | | | | | ⋮ | | | | | ⋮ | |
| MODULATION SLOT #119 | !FSync | P | Data #7789 | T | Data #7790 | T | ··· | Data #7853 | T | Data #7854 | T |
| MODULATION SLOT #120 | SSync | P | Data #7855 | T | Data #7856 | T | ··· | Data #7819 | T | Data #7920 | T |

TRANSMISSION SIGNAL
POINT ARRANGEMENT
SIGNAL

SYNCHRONIZATION SIGNAL

TRANSMISSION TMCC SIGNAL

# FIG. 4

```
┌─────────────────────────────┐
│   RECEPTION PROCESS START   │
└─────────────────────────────┘
              │
              ▼
┌─────────────────────────────┐ S1
│      PERFORM RECEPTION       │
└─────────────────────────────┘
              │
              ▼
┌─────────────────────────────┐ S2
│     EXECUTE AD CONVERSION    │
└─────────────────────────────┘
              │
              ▼
┌─────────────────────────────┐ S3
│ EXECUTE DEMODULATION PROCESSING │
└─────────────────────────────┘
              │
              ▼
┌─────────────────────────────┐ S4
│        CORRECT ERROR         │
└─────────────────────────────┘
              │
              ▼
┌─────────────────────────────┐ S5
│      PERFORM SELECTION       │
└─────────────────────────────┘
              │
              ▼
┌─────────────────────────────┐ S6
│       EXECUTE DECODING       │
└─────────────────────────────┘
              │
              ▼
┌─────────────────────────────┐ S7
│        PERFORM OUTPUT        │
└─────────────────────────────┘
              │
              ▼
    NO ◁ IS PROCESS TO BE TERMINATED? ▷ S8
              │ YES
              ▼
         ┌──────────┐
         │   END    │
         └──────────┘
```

25

## FIG. 5

EP 3 493 498 B1

# FIG. 6

# FIG. 7

```
        ┌─────────────────────┐
        │   SYNCHRONIZATION    │
        │    PROCESS START     │
        └─────────────────────┘
                   │
                   ▼
    ┌─────────────────────────────────┐  S11
    │          DETECT WAVE            │
    └─────────────────────────────────┘
                   │
                   ▼
    ┌─────────────────────────────────┐  S12
    │       SYNCHRONIZE TIMING        │
    └─────────────────────────────────┘
                   │
                   ▼
    ┌─────────────────────────────────┐  S13
    │       LIMIT FREQUENCY BAND      │
    └─────────────────────────────────┘
                   │
                   ▼
    ┌─────────────────────────────────┐  S14
    │       EXECUTE EQUALIZATION      │
    └─────────────────────────────────┘
                   │
                   ▼
    ┌─────────────────────────────────┐  S15
    │        SYNCHRONIZE PHASE        │
    └─────────────────────────────────┘
                   │
                   ▼
    ┌─────────────────────────────────────────┐  S16
    │ DETECT HEAD POSITION OF SYNCHRONIZATION  │
    │              SIGNAL                      │
    └─────────────────────────────────────────┘
                   │
                   ▼
    ┌─────────────────────────────────┐  S17
    │      ESTIMATE FREQUENCY ERROR   │
    └─────────────────────────────────┘
                   │
                   ▼
    ┌─────────────────────────────────┐  S18
    │     GENERATE OSCILLATION SIGNAL │
    └─────────────────────────────────┘
                   │
                   ▼
    NO      ◇ IS PROCESS TO BE TERMINATED? ◇   S19
                   │ YES
                   ▼
        ┌─────────────────────┐
        │         END         │
        └─────────────────────┘
```

# FIG. 8

FIRST SYMBOL  SECOND SYMBOL  THIRD SYMBOL  FOURTH SYMBOL  24TH SYMBOL

90 DEGREES    -90 DEGREES    90 DEGREES

# FIG. 9

FIRST SYMBOL    SECOND SYMBOL    THIRD SYMBOL    FOURTH SYMBOL    24TH SYMBOL

90 DEGREES + $\theta$    -(90 DEGREES + $\theta$)    90 DEGREES + $\theta$

EP 3 493 498 B1

*FIG. 10*

# FIG. 11

FIRST SYMBOL  SECOND SYMBOL  THIRD SYMBOL  FOURTH SYMBOL  24TH SYMBOL

90 DEGREES + X1 -(90 DEGREES + X2) 90 DEGREES + X3

EP 3 493 498 B1

# FIG. 12

| 301 | 302 | 303 | 304 | 305 | 306 |
|---|---|---|---|---|---|
| SYNCHRONI-ZATION SIGNAL EXTRACTING UNIT | SYNCHRONI-ZATION SIGNAL DEMODULATION UNIT | PHASE DIFFERENCE DETECTION UNIT | 90-DEGREE CORRECTION UNIT | SYMBOL AVERAGING UNIT | CONVERSION UNIT |

212

EP 3 493 498 B1

# FIG. 13

```
        ╭─────────────────────────╮
        │    FREQUENCY ERROR       │
        │ ESTIMATION PROCESS START │
        ╰─────────────────────────╯
                    │
    ┌──────────────►│
    │               ▼
    │   ┌─────────────────────────────┐  S51
    │   │ EXTRACT SYNCHRONIZATION SIGNAL │
    │   └─────────────────────────────┘
    │               │
    │               ▼
    │   ┌─────────────────────────────┐  S52
    │   │ DEMODULATE SYNCHRONIZATION SIGNAL │
    │   └─────────────────────────────┘
    │               │
    │               ▼
    │   ┌─────────────────────────────┐  S53
    │   │    DETECT PHASE DIFFERENCE    │
    │   └─────────────────────────────┘
    │               │
    │               ▼
    │   ┌─────────────────────────────┐  S54
    │   │       CORRECT 90-DEGREE       │
    │   └─────────────────────────────┘
    │               │
    │               ▼
    │   ┌─────────────────────────────┐  S55
    │   │    AVERAGE PHASE DIFFERENCE   │
    │   └─────────────────────────────┘
    │               │
    │               ▼
    │   ┌─────────────────────────────┐  S56
    │   │ CONVERT PHASE DIFFERENCE INTO │
    │   │    CORRESPONDING FREQUENCY    │
    │   └─────────────────────────────┘
    │               │
    │               ▼
    │ NO ╱───────────────────────────╲  S57
    └───◄  IS PROCESS TO BE TERMINATED? ╲
        ╲───────────────────────────╱
                    │ YES
                    ▼
              ╭───────────╮
              │    END    │
              ╰───────────╯
```

FIG. 14

FIRST SYMBOL    SECOND SYMBOL    THIRD SYMBOL    FOURTH SYMBOL    24TH SYMBOL

ZERO DEGREE + Y1    ZERO DEGREE + Y2

# FIG. 15

FIRST SYMBOL   SECOND SYMBOL   THIRD SYMBOL   FOURTH SYMBOL   NINTH SYMBOL   10TH SYMBOL   11TH SYMBOL   12TH SYMBOL

90 DEGREES + X1          90 DEGREES + X2          -(90 DEGREES + $X_n$)   90 DEGREES + $X_{n+1}$

FIG. 16

| 301 | 302 | 303 | 304 | 305 | 321 | 306 |
|---|---|---|---|---|---|---|
| SYNCHRONI-ZATION SIGNAL EXTRACTING UNIT | SYNCHRONI-ZATION SIGNAL DEMODULATION UNIT | PHASE DIFFERENCE DETECTION UNIT | 90-DEGREE CORRECTION UNIT | SYMBOL AVERAGING UNIT | SUBTRACTOR | CONVERSION UNIT |

212

EP 3 493 498 B1

# FIG. 17

FIRST SYMBOL    SECOND SYMBOL    THIRD SYMBOL    FOURTH SYMBOL    24TH SYMBOL

90 DEGREES + X1    -(90 DEGREES + X2)    90 DEGREES + X3

# FIG. 18

```
┌─────────────────────────────┐
│   FREQUENCY ERROR           │
│   ESTIMATION PROCESS START   │
└─────────────────────────────┘
              │
              ▼
┌─────────────────────────────┐ S81
│  EXTRACT SYNCHRONIZATION SIGNAL │
└─────────────────────────────┘
              │
              ▼
┌─────────────────────────────┐ S82
│ DEMODULATE SYNCHRONIZATION SIGNAL │
└─────────────────────────────┘
              │
              ▼
┌─────────────────────────────┐ S83
│     DETECT PHASE DIFFERENCE     │
└─────────────────────────────┘
              │
              ▼
┌─────────────────────────────┐ S84
│      CORRECT 90-DEGREE          │
└─────────────────────────────┘
              │
              ▼
┌─────────────────────────────┐ S85
│     AVERAGE PHASE DIFFERENCE    │
└─────────────────────────────┘
              │
              ▼
┌─────────────────────────────┐ S86
│      SUBTRACT STORED VALUE      │
└─────────────────────────────┘
              │
              ▼
┌─────────────────────────────┐ S87
│  CONVERT PHASE DIFFERENCE INTO  │
│    CORRESPONDING FREQUENCY      │
└─────────────────────────────┘
              │
              ▼
     NO   ╱ IS PROCESS TO BE  ╲  S88
    ◄─────◄   TERMINATED?      ►
          ╲                   ╱
              │ YES
              ▼
         ┌─────────┐
         │   END   │
         └─────────┘
```

FIG. 19

## FIG. 20

EP 3 493 498 B1

# FIG. 21

SYNCHRONIZATION
PROCESS START

DETECT WAVE — S101

SWITCH TIMING CORRESPONDING
TO SWITCHING SIGNAL — S102

SYNCHRONIZE TIMING — S103

LIMIT FREQUENCY BAND — S104

EXECUTE EQUALIZATION — S105

SYNCHRONIZE PHASE — S106

DETECT HEAD POSITION OF SYNCHRONIZATION SIGNAL — S107

ESTIMATE FREQUENCY ERROR — S108

GENERATE OSCILLATION SIGNAL — S109

NO — IS PROCESS TO BE TERMINATED? — S110

YES

END

# FIG. 22

| | | | | |
|---|---|---|---|---|
| 301 | 302 | 303 | 304 | 305 | 306 |

SYNCHRONI-ZATION SIGNAL EXTRACTING UNIT (301) → SYNCHRONI-ZATION SIGNAL DEMODULATION UNIT (302) → PHASE DIFFERENCE DETECTION UNIT (303) → 90-DEGREE CORRECTION UNIT (304) → SYMBOL AVERAGING UNIT (305) → CONVERSION UNIT (306)

421

IQ INVERSION DETECTION UNIT → TO 401

212

# FIG. 23

```
        ┌─────────────────────────┐
        │   FREQUENCY ERROR       │
        │ ESTIMATION PROCESS START│
        └─────────────────────────┘
                   │
                   ▼
        ┌─────────────────────────┐ S121
        │ EXTRACT SYNCHRONIZATION SIGNAL │
        └─────────────────────────┘
                   │
                   ▼
        ┌─────────────────────────┐ S122
        │ DEMODULATE SYNCHRONIZATION SIGNAL │
        └─────────────────────────┘
                   │
                   ▼
        ┌─────────────────────────┐ S123
        │  DETECT PHASE DIFFERENCE │
        └─────────────────────────┘
                   │
                   ▼
        ┌─────────────────────────┐ S124
        │ DETECT IQ INVERSION STATE │
        └─────────────────────────┘
                   │
                   ▼
        ┌─────────────────────────┐ S125
        │    CORRECT 90-DEGREE     │
        └─────────────────────────┘
                   │
                   ▼
        ┌─────────────────────────┐ S126
        │ AVERAGE PHASE DIFFERENCE │
        └─────────────────────────┘
                   │
                   ▼
        ┌─────────────────────────┐ S127
        │ CONVERT PHASE DIFFERENCE INTO │
        │  CORRESPONDING FREQUENCY │
        └─────────────────────────┘
                   │
                   ▼
    NO  ◇─────────────────────────◇ S128
   ◄────  IS PROCESS TO BE TERMINATED?
        ◇─────────────────────────◇
                   │ YES
                   ▼
             ┌──────────┐
             │   END    │
             └──────────┘
```

# FIG. 24

FIRST SYMBOL   SECOND SYMBOL   THIRD SYMBOL   FOURTH SYMBOL   FIFTH SYMBOL   SIXTH SYMBOL   24TH SYMBOL

+90 DEGREES          -90 DEGREES          +90 DEGREES

-90 DEGREES          +90 DEGREES          -90 DEGREES

EP 3 493 498 B1

FIG. 25

451

421

| PHASE DIFFERENCE DETECTION UNIT | IQ INVERSION DETECTION UNIT |
|---|---|

→ TO 401

301         302         303         304         305         306

| SYNCHRONI- ZATION SIGNAL EXTRACTING UNIT | SYNCHRONI- ZATION SIGNAL DEMODULATION UNIT | PHASE DIFFERENCE DETECTION UNIT | 90-DEGREE CORRECTION UNIT | SYMBOL AVERAGING UNIT | CONVERSION UNIT |
|---|---|---|---|---|---|

212

*FIG. 26*

# FIG. 27

```
    ┌──────────────────────────────┐
    │      FREQUENCY ERROR         │
    │  ESTIMATION PROCESS START    │
    └──────────────────────────────┘
                 │
                 ▼
    ┌──────────────────────────────┐
    │ EXTRACT SYNCHRONIZATION SIGNAL│  S141
    └──────────────────────────────┘
                 │
                 ▼
    ┌──────────────────────────────┐
    │ DEMODULATE SYNCHRONIZATION SIGNAL│  S142
    └──────────────────────────────┘
                 │
                 ▼
    ┌──────────────────────────────┐
    │    DETECT PHASE DIFFERENCE    │  S143
    └──────────────────────────────┘
                 │
                 ▼
    ┌──────────────────────────────┐
    │    DETECT IQ INVERSION STATE  │  S144
    └──────────────────────────────┘
                 │
                 ▼
    ┌──────────────────────────────┐
    │    DETECT PHASE DIFFERENCE    │  S145
    └──────────────────────────────┘
                 │
                 ▼
    ┌──────────────────────────────┐
    │       CORRECT 90-DEGREE       │  S146
    └──────────────────────────────┘
                 │
                 ▼
    ┌──────────────────────────────┐
    │    AVERAGE PHASE DIFFERENCE   │  S147
    └──────────────────────────────┘
                 │
                 ▼
    ┌──────────────────────────────┐
    │  CONVERT PHASE DIFFERENCE INTO│  S148
    │    CORRESPONDING FREQUENCY    │
    └──────────────────────────────┘
                 │
                 ▼
    NO ◁─── IS PROCESS TO BE TERMINATED? ▷  S149
                 │ YES
                 ▼
          ┌────────────┐
          │    END     │
          └────────────┘
```

## FIG. 28

EP 3 493 498 B1

# FIG. 29

EP 3 493 498 B1

# FIG. 30

```
        ╭────────────────────────────╮
        │   FREQUENCY ERROR          │
        │ ESTIMATION PROCESS START   │
        ╰────────────────────────────╯
                     │
                     ▼
        ┌────────────────────────────┐ S181
        │ EXTRACT SYNCHRONIZATION SIGNAL │
        └────────────────────────────┘
                     │
                     ▼
        ┌────────────────────────────┐ S182
        │ DEMODULATE SYNCHRONIZATION SIGNAL │
        └────────────────────────────┘
                     │
                     ▼
        ┌────────────────────────────┐ S183
        │   DETECT PHASE DIFFERENCE  │
        └────────────────────────────┘
                     │
                     ▼
        ┌────────────────────────────┐ S184
        │   DETECT IQ INVERSION STATE │
        └────────────────────────────┘
                     │
                     ▼
        ┌────────────────────────────┐ S185
        │      CORRECT 90-DEGREE      │
        └────────────────────────────┘
                     │
                     ▼
        ┌────────────────────────────┐ S186
        │  AVERAGE PHASE DIFFERENCE   │
        └────────────────────────────┘
                     │
                     ▼
        ┌────────────────────────────┐ S187
        │     SUBTRACT STORED VALUE   │
        └────────────────────────────┘
                     │
                     ▼
        ┌────────────────────────────┐ S188
        │  CONVERT PHASE DIFFERENCE INTO │
        │    CORRESPONDING FREQUENCY  │
        └────────────────────────────┘
                     │
                     ▼
   NO ╱────────────────────────────╲ S189
◄─────  IS PROCESS TO BE TERMINATED?
       ╲────────────────────────────╱
                     │ YES
                     ▼
              ╭──────────╮
              │   END    │
              ╰──────────╯
```

EP 3 493 498 B1

# FIG. 31

# FIG. 32

```
        ┌─────────────────────────────┐
        │    FREQUENCY ERROR          │
        │ ESTIMATION PROCESS START    │
        └─────────────────────────────┘
                      │
                      ▼
        ┌─────────────────────────────┐  S201
        │ EXTRACT SYNCHRONIZATION     │
        │ SIGNAL                      │
        └─────────────────────────────┘
                      │
                      ▼
        ┌─────────────────────────────┐  S202
        │ DEMODULATE SYNCHRONIZATION  │
        │ SIGNAL                      │
        └─────────────────────────────┘
                      │
                      ▼
        ┌─────────────────────────────┐  S203
        │ DETECT PHASE DIFFERENCE     │
        └─────────────────────────────┘
                      │
                      ▼
        ┌─────────────────────────────┐  S204
        │ DETECT IQ INVERSION STATE   │
        └─────────────────────────────┘
                      │
                      ▼
        ┌─────────────────────────────┐  S205
        │ DETECT PHASE DIFFERENCE     │
        └─────────────────────────────┘
                      │
                      ▼
        ┌─────────────────────────────┐  S206
        │ CORRECT 90-DEGREE           │
        └─────────────────────────────┘
                      │
                      ▼
        ┌─────────────────────────────┐  S207
        │ AVERAGE PHASE DIFFERENCE    │
        └─────────────────────────────┘
                      │
                      ▼
        ┌─────────────────────────────┐  S208
        │ SUBTRACT STORED VALUE       │
        └─────────────────────────────┘
                      │
                      ▼
        ┌─────────────────────────────┐  S209
        │ CONVERT PHASE DIFFERENCE    │
        │ INTO CORRESPONDING FREQUENCY│
        └─────────────────────────────┘
                      │
                      ▼
  NO    ╱ IS PROCESS TO BE TERMINATED? ╲  S210
  ◄─────╲                             ╱
                      │ YES
                      ▼
              ┌──────────────┐
              │     END      │
              └──────────────┘
```

**EP 3 493 498 B1**

**Patent documents cited in the description**

- JP 2008104015 A
- JP 2008278188 A
- WO 2009141836 A